# EUROPEAN PATENT APPLICATION

(11) **EP 4 621 539 A1**
(43) Date of publication of application: **24.09.2025**
(21) Application number: 24802720.3
(22) Date of filing: 17.04.2024
(51) Int. Cl.: G06F 3/04842

(54) **METHOD FOR IMPLEMENTING MEDIA PLAYBACK CONTROL, ELECTRONIC DEVICE, SYSTEM, AND READABLE STORAGE MEDIUM**

(30) Priority: 05.05.2023 CN 202310497618; 20.06.2023 CN 202310740096
(71) Applicant: Huawei Technologies Co., Ltd., Shenzhen, Guangdong 518129 (CN)
(72) Inventor: ZHU, Chaochao, Shenzhen, Guangdong 518129 (CN)
(74) Representative: Isarpatent
(86) International application number: PCT/CN2024/088242
(87) International publication number: WO 2024/230434

(57) **Abstract**

This application provides a method for implementing media playing control and an electronic device. The method is applied to the electronic device. When the electronic device is connected to another electronic device, the electronic device may obtain information about an application of a media type (for example, an audio type) that is installed on the connected electronic device and that is started on the connected electronic device, and display an icon of the application based on the obtained information about the application. Further, when the user taps an icon of an application (for example, HUAWEI Music), media data of the application is obtained from the connected electronic device and played. In this way, in a scenario in which the electronic device is connected to another electronic device, the user quickly finds and starts a media application that has been used on the another electronic device. This improves user experience.

## Description

### TECHNICAL FIELD

This application relates to the field of electronic devices, and in particular, to a method and system for implementing media playing control, an electronic device, and a readable storage medium.

### BACKGROUND

With continuous development of intelligent electronic devices (such as smartphones, smart watches, and smart tablets), application programs (Application program, application or APP for short) of the intelligent electronic devices are continuously enriched, and the intelligent electronic devices have become a center of people's life information. There is also an increasing quantity of cases in which an individual has a plurality of intelligent electronic devices. In addition, people may run more media applications such as an audio application and a video application through intelligent electronic devices.

As a collaboration capability between intelligent devices becomes stronger, a user may start, on an electronic device, a media application on another electronic device. However, there is no quick manner for the user to conveniently find the media application that the user wants to start and that is on the another electronic device. This affects user experience.

### SUMMARY

An objective of this application is to provide a method and a system for implementing media playing control, an electronic device, and a readable storage medium, to improve operation efficiency of media playing control, so as to improve user experience.

The foregoing and other objects are achieved by using the features in the independent claims. Further implementations are embodied in the dependent claims, this specification, and the accompanying drawings.

According to a first aspect, a method for implementing media playing control is provided. The method is applied to a first electronic device, and the method includes:
displaying a first interface of a media playing control application on the first electronic device;
detecting a first input operation performed on the first interface;
in response to the first input operation, obtaining information about M target applications installed on a second electronic device, where the second electronic device is connected to the first electronic device, the M target applications are applications of a media type on the second electronic device (referred to as media applications for short below), the media type is an audio type or a video type, and M is a positive integer;
displaying a second interface of the media playing control application based on information about N target applications in the M target applications, where the second interface includes icons of the N target applications;
detecting a second input operation performed on a first icon, where the first icon is an icon of a first application in the N target applications; and
in response to the second input operation, obtaining media data of the first application running on the second electronic device, and playing the media data.

Specifically, the first electronic device may establish a short-distance connection (for example, a wireless local area network connection or a Bluetooth connection) to the second electronic device, or the first electronic device may be connected to the second electronic device through a server.

According to an implementation of the first aspect of this application, an icon of a media application (for example, HUAWEI Music) on an electronic device (namely, the second electronic device) may be displayed in an interface of a media playing control application on another electronic device (namely, the first electronic device). In addition, the media data of the media application is played on the first electronic device by operating the icon of the media application, and the media application does not need to be searched for in a large quantity of applications of various types. This improves operation efficiency of media playing control, and saves time of a user.

The media playing control application may be specifically an audio playing control application. Correspondingly, the M target applications are all applications of the audio type. The media playing control application may alternatively be a video playing control application. Correspondingly, the M target applications are all applications of the video type. According to the two implementations, playing control on audio media may be specially implemented, or playing control on video media may be specially implemented. This is more targeted, and further improves operation efficiency of media playing control.

Information about any target application received by the first electronic device may include an icon of the target application. Correspondingly, the first electronic device may directly display the icon included in the information about the target application. According to this implementation, the icon of the target application can be quickly obtained and displayed, and efficiency is high.

The information about the any target application received by the first electronic device may include an identifier of the target application (for example, a package name of the target application). The first electronic device may obtain, based on the identifier of the target application, the icon of the target application stored in the first electronic device, and further display the obtained icon. According to this implementation, the information about the target application may not need to include the icon of the target application. This reduces an amount of transmitted data.

It should be noted that the information about the target application may include both the identifier of the target application and the icon of the target application. In this implementation, the icon included in the information about the target application may be directly displayed.

With reference to the first aspect, in some implementations of the first aspect, a manner of obtaining the information about the M target applications installed on the second electronic device may be specifically: sending a request message to the second electronic device, where the request message is used to request to obtain the information about the target application of the second electronic device; and receiving a response message from the second electronic device, where the response message includes the information about the target application.

According to this implementation, when an input operation of the user is detected, the information about the target application is requested to be obtained from the second electronic device, and the information about the target application may be temporarily obtained when the information needs to be displayed, to ensure accuracy of the obtained information.

In some embodiments, after the first electronic device sends the request message to the second electronic device, and fails to receive the response message from the second electronic device within specific time, the first electronic device continues to send the request message to obtain the information about the M target applications installed on the second electronic device. If a quantity of sending times exceeds a preset quantity of times, the first electronic device stops sending the request message to the second electronic device, to ensure that the first electronic device can obtain the information about the target application from the second electronic device in a scenario in which a network is unstable.

With reference to the first aspect, in some implementations of the first aspect, a manner of obtaining the information about the M target applications installed on the second electronic device may be specifically: obtaining the information about the M target applications on the second electronic device from a cache of the first electronic device. The information about the M target applications is information about the M target applications that is actively sent by the second electronic device and that is received by the first electronic device after the first electronic device is connected to the second electronic device.

Specifically, after the electronic devices are connected, the second electronic device actively sends the information about the M target applications to the first electronic device, or the first electronic device sends the request message to the second electronic device to obtain the information about the M target applications. After receiving the information about the M target applications on the second electronic device, the first electronic device stores the received information about the M target applications in the cache of the first electronic device. When the first electronic device needs to display the information about the target application, the information may be directly obtained from the cache of the first electronic device. This improves information obtaining efficiency.

In some embodiments, after the second electronic device actively sends, to the first electronic device, the information about the application that is installed on the second electronic device and that has been run, and fails to receive the response message of the first electronic device within specific time, the second electronic device continues to send, to the first electronic device, the information about the target application installed on the second electronic device. If a quantity of sending times exceeds a preset quantity of times, the second electronic device stops sending the information to the first electronic device. It is ensured that the first electronic device can obtain the information about the target applications from the second electronic device in a scenario in which a network is unstable.

With reference to the first aspect, in some implementations of the first aspect, the M target applications have been started on the second electronic device.

Specifically, the user wants to use a media application that has been started on the second electronic device before. When the user wants to use the media application on the first electronic device, the user may directly see an icon of the media application in the interface of the media playing control application. According to this implementation, the user can quickly find the media application that has been started before. This further saves time of the user.

With reference to the first aspect, in some implementations of the first aspect, the second interface includes a first area and a second area, the first area is used to display a media playing status, and the second area includes the icons of the N target applications.

Specifically, the second interface of the media playing control application includes two areas. The first area is used to display a media playing status, and is used to prompt the user with an application that is currently being played. The second area is used to display the icons including the N target applications, and is used to prompt the user with a media application that can be selected for playing. Different areas of the media playing control application separately display a playing status of an application that is being played and a media application that can be selected for playing, so that the user can more conveniently view information about the media application and conveniently perform playing control.

With reference to the first aspect, in some implementations of the first aspect, the method further includes: in response to the second input operation, displaying the first icon and a media playing status of the first application in the first area.

Specifically, in response to the second input operation, an application icon of a media application that is being played is displayed in the first area, to prompt the user with the media application that is being played. In addition, a media playing status of the media application is further displayed in the first area, such as a cover of media content that is being played, a control button for controlling media playing, and a media playing progress. According to this implementation, interface friendliness and convenience of a playing control operation are further improved.

In some embodiments, when the first area displays the cover of the media that is being played, the cover may alternatively be displayed in a rotating manner or displayed in a highlighted and flashing manner, to better remind the user about information about the media that is currently being played.

With reference to the first aspect, in some implementations of the first aspect, the method further includes: updating display information in the second area, where updated display information does not include the first icon.

Specifically, when the user taps the icon of the first application in the N target applications in the second area of the second interface of the media playing control application, the icon of the first application is displayed in the first area of the second interface of the media playing control application, and the icon indicates a media application that is currently being played. Correspondingly, the display information in the second area is updated, and the updated display information no longer displays the icon of the first application, that is, the media application that is being played in the first area of the media playing control application is not in the second area. According to this implementation, the icon of the media application that is currently being played is not repeatedly displayed in the second area. This improves simplicity of the interface, and further improves user experience.

With reference to the first aspect, in some implementations of the first aspect, the method includes: detecting a third input operation performed on a second icon in the second area, where the second icon is an icon of a second application in the N target applications; in response to the third input operation, obtaining media data of the second application running on the second electronic device, and playing the media data; displaying the second icon and a media playing status of the second application in the first area; and updating the display information in the second area, where updated display information includes the first icon and does not include the second icon.

Specifically, after the user taps the second icon representing the second application in the second area in the second interface of the media playing control application, a switching operation is generated between the second icon and the first icon that represents the first application in the first area in the second interface, that is, the first application that is being played pauses playing, the first icon of the first application is displayed in the second area, and the media data of the second application is sent from the second electronic device to the first electronic device. The first electronic device plays the received media data of the second application, and displays the first icon in the first area. In this way, after quickly finding the application that the user wants to play, the user may tap the icon to play the application, and display the application on the playing interface of the media playing control application. According to this implementation, the user can flexibly select, from the media playing control application, the application that the user wants to play. This further improves user experience.

With reference to the first aspect, in some implementations of the first aspect, the method further includes: displaying a device type icon. The device type icon indicates a type of the second electronic device, and the device type icon is displayed in association with the icons of the N target applications.

In embodiments of this application, the device type icon of the second electronic device is displayed in association with the icons of the N target applications, and the device type icon is displayed in an upper right corner of an area in which the N target applications are displayed, to notify the user that the target application in the area is associated with the second electronic device. Alternatively, the icon of the device type may be displayed in a highlight, grayscale, or shadow manner. According to this implementation, the user can quickly identify, through an icon of a device type associated in the area, an electronic device associated with the target application in the area. This improves interface friendliness.

With reference to the first aspect, in some implementations of the first aspect, the device type icon may be displayed in association with an icon of each of the N target applications.

In embodiments of this application, an icon identifying a type of the second electronic device is displayed in an upper right corner of an icon of each target application. Alternatively, the icon of the device type may be displayed in a highlight, grayscale, or shadow manner. According to this implementation, the user can quickly identify, through the icon of the device type associated with the icon of each target application, an electronic device associated with the target application. This improves interface friendliness.

With reference to the first aspect, in some implementations of the first aspect, the method includes: displaying information about media latest played by the N target applications, where information about media latest played by each target application is displayed in association with an icon of the target application.

Specifically, when the media information of the N target applications is displayed, the information about the media latest played by the N target applications is displayed in association with the icon of the target application. The user may select, from the N target applications based on the information about the media latest played, an application that the user wants to start. According to this implementation, the user can obtain the information about the media latest played without tapping the icon of the target application to start the target application, so that it is more convenient for the user to select an application that needs to be started, and user experience is further improved.

In some embodiments, the displayed information about the media latest played may be a name of an audio that is being played.

With reference to the first aspect, in some implementations of the first aspect, the method includes: receiving an update message sent by the second electronic device, where the update message includes information about a third application, and the third application does not belong to the M target applications; and displaying an icon of the third application in the second area based on the update message.

Specifically, the third application installed on the second electronic device changes from a stopped state to a started state, and the third application does not belong to the M target applications. In response to a status change of the third application, the second electronic device sends the update message to the first electronic device. The update message includes the information about the third application. After receiving the update message sent by the second electronic device, the first electronic device displays the icon of the third application in the second area in the second interface of the first electronic device based on the update message. The user may see that the icon of the latest started application is displayed in the second area of the first electronic device, and does not need to reconnect to the device to obtain information about the latest started application. According to this implementation, the first electronic device may obtain the information about the latest started target application, to ensure real-time performance of the obtained information.

In some embodiments, that the third application installed on the second electronic device changes from the stopped state to the started state may be that the user taps the icon of the third application on the second electronic device, the second electronic device starts the third application on the second electronic device in response to the tap operation of the user, and the third application changes from the stopped state to the started state, and sends the update message to the first electronic device.

In some embodiments, that the third application installed on the second electronic device changes from the stopped state to the started state may alternatively be that the user taps the icon of the third application in an application list of the second electronic device on the first electronic device, and the first electronic device sends a request to obtain media data of the third application on the second electronic device in response to a tap operation of the user, after receiving a request message that is for obtaining the media data of the third application and that is sent by the first electronic device, the second electronic device starts the third application, that is, changes the third application from the stopped state to the started state, returns a response message of the media data of the third application to the first electronic device, and sends an update message to the first electronic device.

With reference to the first aspect, in some implementations of the first aspect, a display sequence of the icons of the N target applications is consistent with a sequence of latest starting time of the target applications.

In this embodiment, when the first electronic device displays the N target applications, icons of the target applications are displayed in a sequence of latest starting time of the target applications. According to this implementation, the user can more conveniently find the recently started target application. This improves user experience.

With reference to the first aspect, in some implementations of the first aspect, the information that is about the M target applications and that is sent by the second electronic device includes latest starting time of each target application, and the first electronic device sorts the target applications based on the received latest starting time of each target application, and displays the icons of the first N target applications.

Specifically, the second electronic device stores the latest starting time of the M target applications. Before sending the information about the target applications, the second electronic device does not need to sort the target applications, and the information sent to the first electronic device includes the latest starting time of the target applications. After obtaining the information that is about the M target applications and that is sent by the second electronic device, the first electronic device sorts the target applications based on the received latest starting time of each target application, and displays icons of the first N target applications. According to this implementation, the first electronic device performs sorting and displaying based on the obtained latest starting time. This improves sorting flexibility of the first electronic device.

In some embodiments, considering a scenario in which time asynchronization occurs between a plurality of devices, the latest starting time that is of each target application and that is sent by the second electronic device may be universal time coordinated (Universal Time Coordinated, UTC). UTC is also referred to coordinated universal time. The UTC is used to synchronize time between devices.

With reference to the first aspect, in some implementations of the first aspect, the method includes: The information that is about the M target applications and that is received from the second electronic device is sorted based on latest starting time of each target application, and the first electronic device displays the icons of first N target applications based on a sequence of the target application.

In this embodiment, the information about the M target applications that is received by the first electronic device is sorted based on the latest starting time of each target application. The first electronic device does not need to perform sorting again, and directly displays the icons of the first N target applications that have been sorted and that are displayed in sequence. According to this implementation, the first electronic device does not need to perform a sorting operation, so that a display speed of an icon of the target application is improved, and better user experience is provided.

With reference to the first aspect, in some implementations of the first aspect, the method includes: displaying, in the second area, an icon of at least one application of a media type that is installed on the first electronic device.

In this embodiment, when the target application of the second electronic device is displayed in the second area in the second interface of the first electronic device, the at least one application of the media type on the first electronic device may also be displayed. According to this implementation, the user may not only select the target application on the second electronic device in the second area, but also select the media application on the first electronic device. There are more choices. This improves user experience.

With reference to the first aspect, in some implementations of the first aspect, the second area includes a first sub-area and a second sub-area, the first sub-area is used to display an icon of a target application, and the second sub-area is used to display an icon of an application of a media type that is installed on the first electronic device.

Specifically, the second area of the second interface of the first electronic device includes two sub-areas: the first sub-area and the second sub-area. The first sub-area is used to display an icon of a target application of the second electronic device, and the user may select, in the sub-area, an application installed on the second electronic device. The second sub-area is used to display an icon of an application of a media type that is installed on the first electronic device, and the user may select, in the sub-area, the application of the media type that is installed on the first electronic device. According to this implementation, areas of the first electronic device and the second electronic device are distinguished through different sub-areas, so that the user can view icons of different electronic devices in different areas. This more conveniently selects applications on different electronic devices.

According to a second aspect, a system for implementing media playing control is provided. The system includes a first electronic device and a second electronic device, and the system includes:

The first electronic device is configured to display a first interface of a media playing control application on the first electronic device;
the first electronic device is further configured to: in response to a detected first input operation performed on the first interface, obtain information about M target applications installed on the second electronic device, where the second electronic device is connected to the first electronic device, the M target applications are applications of a media type that have been started on the second electronic device, the media type is an audio type or a video type, and M is a positive integer; and
the first electronic device displays a second interface of the media playing control application based on information about N target applications in the M target applications, where the second interface includes icons of the N target applications; detects a second input operation performed on a first icon, where the first icon is an icon of a first application in the N target applications; and in response to the second input operation, obtains media data of the first application running on the second electronic device, and plays the media data; and
the second electronic device is configured to send the information about the M target applications installed on the second electronic device to the first electronic device, where the first electronic device is connected to the second electronic device, the M target applications are the applications of the media type that have been started on the second electronic device, the media type is the audio type or the video type, and M is the positive integer; and
the second electronic device is further configured to: receive a first request message sent by the first electronic device, where the first request message is used to request the media data of the first application in the M target applications; and send the media data of the first application to the first electronic device.

In the system, after the electronic devices are connected, the first electronic device obtains the information about the M target applications installed on the second electronic device, where the M target applications are applications of a media type that has been started on the second electronic device. In addition, the icons of N target applications in the M target applications are displayed on the first electronic device based on the obtained information about the M target applications. A user may tap an icon of any one of the N target applications, obtain media data of a running application from the second electronic device, and play the media data. In embodiments of this application, an icon of a media application (for example, HUAWEI Music) started on an electronic device (that is, the second electronic device) may be displayed in an interface of a media playing control application on another electronic device (that is, the first electronic device). Generally, the user wants to use an application that has been started before, when the user wants to use the media application on the first electronic device, the user may directly see the icon of the media application in the interface of the media playing control application, and play media data of the media application on the first electronic device by operating the icon of the media application, and there is no need to search for the media application in a large quantity of applications of various types. This improves operation efficiency of media playing control and saves time of the user.

In some embodiments, after the first electronic device sends a request message to the second electronic device, and fails to receive a response message from the second electronic device within specific time, the first electronic device continues to send the request message to obtain the information about the M target applications installed on the second electronic device.

In some embodiments, after the second electronic device actively sends, to the first electronic device, information about an application that is installed on the second electronic device and that has been run, and fails to receive a response message from the first electronic device within specific time, the second electronic device continues to send, to the first electronic device, the information about the application that is installed on the second electronic device and that has been run.

With reference to the second aspect, in some implementations of the second aspect, the M target applications have been started on the second electronic device.

Specifically, the user wants to use an application that has been started on the second electronic device before. When the user wants to use the media application on the first electronic device, the user may directly see an icon of the media application in the interface of the media playing control application. According to this implementation, the user can quickly find the application that has been started before. This further saves time of the user.

With reference to the second aspect, in some implementations of the second aspect, the first electronic device further displays a device type icon. The device type icon indicates a type of the second electronic device, and the device type icon is displayed in association with the icons of the N target applications.

In embodiments of this application, the device type icon of the second electronic device is displayed in association with the icons of the N target applications, and the device type icon is displayed in an upper right corner of an area in which the N target applications are displayed, to notify the user that the target application in the area is associated with the second electronic device. According to this implementation, the user can quickly identify, through an icon of a device type associated in the area, an electronic device associated with the target application in the area. This improves interface friendliness.

Alternatively, the icon of the device type may be displayed in a highlight, grayscale, or shadow manner.

With reference to the second aspect, in some implementations of the second aspect, the first electronic device is further configured to: receive an update message sent by the second electronic device, where the update message includes information about a second application, and the second application does not belong to the M target applications; and display an icon of the second application in a second area based on the update message.

Specifically, the second application installed on the second electronic device changes from a stopped state to a started state, and the second application does not belong to the M target applications. In response to a status change of the second application, the second electronic device sends the update message to the first electronic device. The update message includes information about the second application. After receiving the update message sent by the second electronic device, the first electronic device displays the icon of the second application in the second area in the second interface of the first electronic device based on the update message. The user may see that the icon of the latest started application is displayed in the second area of the first electronic device, and does not need to reconnect to the device to obtain information about the latest started application. According to this implementation, the first electronic device may obtain the information about the latest started target application, to ensure real-time performance of the obtained information.

With reference to the second aspect, in some implementations of the second aspect, the M target applications belong to a first allowlist of the second electronic device, and the first allowlist includes one or more applications of the media type. The second electronic device is configured to start the second application. The second application does not belong to the M target applications and belongs to the first allowlist. The second electronic device is further configured to send the update message to the first electronic device. The update message includes updated information about the M target applications, and the updated information about the M target applications includes information about the second application.

Specifically, the M target applications sent by the second electronic device to the first electronic device are applications that belong to the first allowlist of the second electronic device, and the allowlist includes the one or more applications of the media type. According to this implementation, it is ensured that after the information about the media application is sent to the first electronic device, the information can be played in a media playing control application of the first electronic device, to avoid a case in which user experience is affected because the information cannot be played.

According to a third aspect, a method for implementing media playing control is provided. The method is applied to a second electronic device, and the method includes:
sending information about M target applications installed on the second electronic device to a first electronic device, where the first electronic device is connected to the second electronic device, the M target applications are applications of a media type that have been started on the second electronic device, the media type is an audio type or a video type, and M is a positive integer; receiving a first request message sent by the first electronic device, where the first request message is used to request media data of a first application in the M target applications; and sending the media data of the first application to the first electronic device.

Specifically, before connecting to the first electronic device, the second electronic device records an application of a media type that has been started on the second electronic device. It may be understood that the media type is the audio type or the video type. When the second electronic device is connected to the first electronic device, the second electronic device may send, to the first electronic device, the information about the M media applications installed on the second electronic device. The second electronic device is further configured to receive the request message sent by the first electronic device, where the request message is used to request the media data of the first application in the M target applications. When receiving the request message, the second electronic device determines whether the first application is running. If the first application is not running, the first application is started on the second electronic device, and the media data of the first application is returned to the first electronic device. According to this implementation, information about a media application (for example, HUAWEI Music) started on one electronic device (that is, the second electronic device) may be sent to another electronic device (that is, the first electronic device), and information about all applications does not need to be sent to the another electronic device. This improves information transmission efficiency of the media application. In some embodiments, after the second electronic device sends a request message for sending the information about the M target applications to the first electronic device, and fails to receive a response message of the first electronic device within specific time, the second electronic device continues to send the information about the target application installed on the second electronic device to the first electronic device. If a quantity of sending times exceeds a preset quantity of times, the second electronic device stops sending the information to the first electronic device. It is ensured that the first electronic device can obtain the information about the M target applications from the second electronic device in a scenario in which a network is unstable.

With reference to the third aspect, in some implementations of the third aspect, the M target applications have been started on the second electronic device.

Specifically, the second electronic device sends, to the first electronic device, the information about the M target applications that are installed on the second electronic device and that have been started. In this way, the user can see, on the first electronic device, the media application that has been started on the second electronic device before. According to this implementation, the user can quickly find the media application that has been started before. This further saves time of the user.

With reference to the third aspect, in some implementations of the third aspect, the M target applications belong to a first allowlist, and the first allowlist includes one or more applications of the media type; and the method includes:
starting a second application, where the second application does not belong to the M target applications and belongs to the first allowlist; and
sending an update message to the first electronic device, where the update message includes updated information about the M target applications, and the updated information about the M target applications includes information about the second application.

Specifically, the M target applications sent by the second electronic device to the first electronic device are applications that belong to the first allowlist of the second electronic device, and the allowlist includes the one or more applications of the media type. According to this implementation, it is ensured that after the information about the media application is sent to the first electronic device, the information can be played in a media playing control application of the first electronic device, to avoid a case in which user experience is affected because the information cannot be played.

With reference to the third aspect, in some implementations of the third aspect, applications in the M target applications are latest M applications that are in the first allowlist and that are determined based on latest starting time of the applications.

Specifically, the M target applications are M latest applications that are in an allowlist and that are determined based on latest starting time of each target application.

With reference to the third aspect, in some implementations of the third aspect, the M target applications are sorted based on latest starting time of the target applications when the information about the M target applications is sent.

Specifically, when the second electronic device sends the information about the M target applications to the first electronic device, the M target applications are sorted based on the latest starting time of the target applications. When the second electronic device performs sorting, a message sent by the second electronic device to the first electronic device may not include the starting time of the target applications. This simplifies a format of a message between the devices. After receiving the message, the first electronic device may display the message in a sequence of the received target applications. This simplifies a processing procedure of the first electronic device, and improves display efficiency of the first electronic device. According to this implementation, efficiency of displaying the icon of the target application by the first electronic device is improved.

With reference to the third aspect, in some implementations of the third aspect, information about the target application includes information about media latest played by the target application.

In embodiments, the information that is about the target application and that is sent by the second electronic device to the first electronic device includes information about the media being played by the target application, and the information sent to the first electronic device is displayed in association with an icon of the target application. According to this implementation, the user may view, in an icon display area of the target application, the information about the media being played by the application, so that it is more convenient for the user to select an application that needs to be started, and user experience is further improved. In some embodiments, the displayed information about the media latest played may be a name of an audio that is being played.

According to a fourth aspect, a communication apparatus for implementing media playing control is provided. The apparatus is used in a first electronic device, and includes a display unit and a processing unit.

The display unit is configured to display a first interface of a media playing control application on the first electronic device.

The processing unit is configured to: detect a first input operation acting on the first interface; and in response to the first input operation, obtain information about M target applications installed on a second electronic device, where the second electronic device is connected to the first electronic device, the M target applications are applications of a media type that have been started on the second electronic device, the media type is an audio type or a video type, and M is a positive integer.

The display unit is further configured to display a second interface of the media playing control application based on information about N target applications in the M target applications, where the second interface includes icons of the N target applications.

The processing unit is further configured to: detect a second input operation performed on a first icon, where the first icon is an icon of a first application in the N target applications; and in response to the second input operation, obtain media data of the first application running on the second electronic device, and play the media data.

According to a fifth aspect, a communication apparatus for implementing media playing control is provided. The apparatus is used in a second electronic device, and includes a communication unit and a processing unit.

The processing unit is configured to send, by using the communication unit, information about M target applications installed on the second electronic device to a first electronic device, where the first electronic device is connected to the second electronic device, the M target applications are applications of a media type that have been started on the second electronic device, the media type is an audio type or a video type, and M is a positive integer.

The processing unit is further configured to: receive, by using the communication unit, a first request message sent by the first electronic device, where the first request message is used to request media data of a first application in the M target applications; and send the media data of the first application to the first electronic device by using the communication unit.

According to a sixth aspect, an embodiment of this application provides an electronic device, including a memory. The memory is configured to store computer program code, the computer program code includes instructions, and when the electronic device reads the instructions from the memory, the electronic device is enabled to perform the technical solution according to any one of the first aspect and the possible designs of the first aspect.

According to a seventh aspect, a computer-readable storage medium in an embodiment of this application is provided. The computer-readable storage medium includes a computer program. When the computer program is run on an electronic device, the electronic device is enabled to perform the technical solutions according to any one of the first aspect and the possible designs of the first aspect.

According to an eighth aspect, a computer program in an embodiment of this application is provided, where the computer program includes instructions. When the instructions are run on a computer, the computer is enabled to perform the technical solutions according to any one of the first aspect and the possible designs of the first aspect.

According to a ninth aspect, a graphical user interface on an electronic device is provided in an embodiment of this application. The electronic device has a display, one or more memories, and one or more processors. The one or more processors are configured to execute one or more computer programs stored in the one or more memories. The graphical user interface includes a graphical user interface displayed when the electronic device performs the technical solutions according to the first aspect and any possible design of the first aspect.

It should be noted that, for beneficial effect of the designs of the terminal device provided in the fourth aspect to the tenth aspect of embodiments of this application, refer to beneficial effect of any possible design of the first aspect. Details are not described herein.

### BRIEF DESCRIPTION OF DRAWINGS

To describe technical solutions in embodiments of this disclosure or the conventional technology more clearly, the following briefly describes accompanying drawings for describing embodiments or the conventional technology. It is clear that the accompanying drawings in the following description show some embodiments of this disclosure, and a person of ordinary skill in the art may still derive other accompanying drawings from these accompanying drawings without creative efforts.
FIG. 1 is a diagram of a structure of an electronic device according to an embodiment of this application;
FIG. 2 is a block diagram of a software structure of an electronic device according to an embodiment of this application;
FIG. 3(a) to FIG. 3(c) show a group of GUIs according to an embodiment of this application;
FIG. 4 is a diagram of an architecture according to an embodiment of this application;
FIG. 5 is an overall flowchart according to an embodiment of this application;
FIG. 6(a) to FIG. 8(d) show a group of GUIs according to an embodiment of this application;
FIG. 9 is a schematic flowchart of obtaining a target application according to an embodiment of this application;
FIG. 10(a) to FIG. 14(f) show a group of GUIs according to an embodiment of this application;
FIG. 15 is a schematic flowchart of obtaining an update message according to an embodiment of this application;
FIG. 16(a) to FIG. 20 show a group of GUIs according to an embodiment of this application; and
FIG. 21 and FIG. 22 are diagrams of structures of apparatuses according to embodiments of this application.

### DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly. It should be further understood that in the following embodiments of this application, "at least one" and "one or more" refer to one, two, or more. The term "and/or" is used to describe an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS^{®}, Android^{®}, Microsoft^{®}, or another operating system. The portable electronic device may alternatively be another portable electronic device, like a laptop (Laptop). It should be further understood that, in some other embodiments, the electronic device may not be the portable electronic device but a desktop computer.

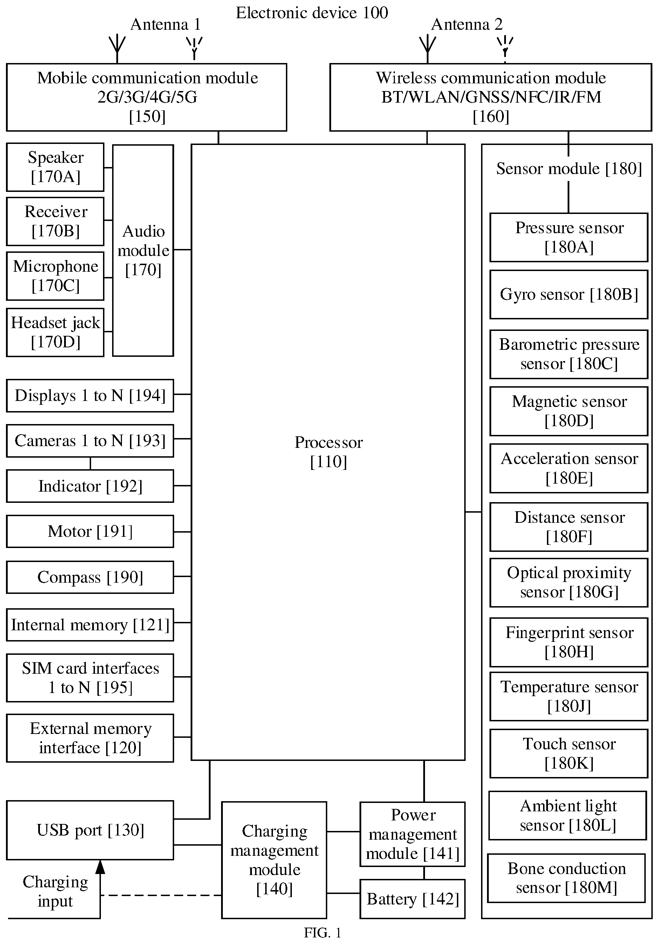

For example, FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP) a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may be further disposed in the processor 110, to store instructions and data. For example, the memory in the processor 110 may be a cache memory. The memory may store instructions or data that has been recently used or cyclically used by the processor 110. If the processor 110 needs to use the instructions or the data again, the processor may directly invoke the instructions or the data from the memory. In this way, repeated access is avoided, waiting time of the processor 110 is reduced, and efficiency of processing data or executing instructions by the electronic device 100 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB port, and/or the like. The USB port 130 is an interface that conforms to a USB standard specification, and may be specifically a mini USB port, a micro USB port, a USB Type C port, or the like. The USB port 130 may be configured to connect to a charger to charge the electronic device 100, or may be configured to transmit data between the electronic device 100 and a peripheral device. The USB port 130 may alternatively be configured to connect to a headset, and play an audio by using the headset.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The camera 193 is configured to capture a static image or a video. The digital signal processor is configured to process a digital signal, and may further process another digital signal in addition to a digital image signal. The video codec is configured to compress or decompress a digital video. The external memory interface 120 may be configured to be connected to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a non-volatile memory, for example, one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement audio functions, for example, a music playing function and a recording function, by using the audio module 170, the speaker 170A, the telephone receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

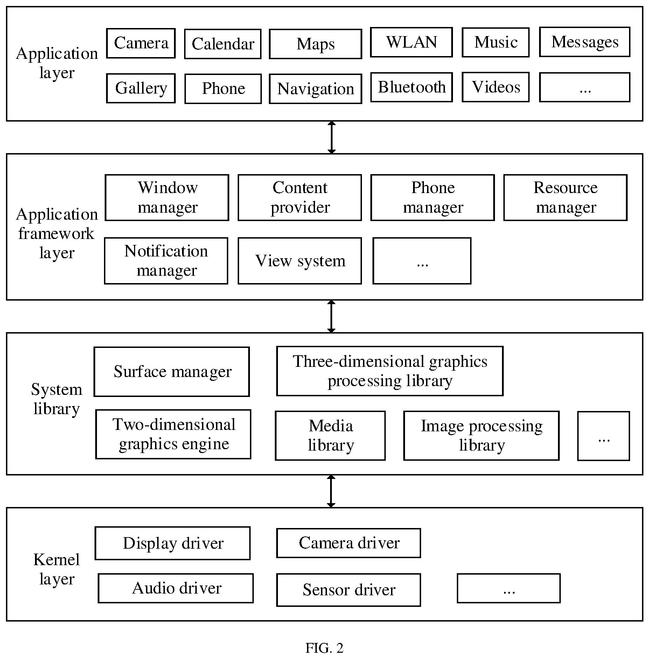

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application APP at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to: store and obtain data, and enable the data to be accessed by an application. The data may include a video, an image, an audio, calls that are made and answered, a browsing history, a bookmark, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or an indicator light blinks.

The system library may include a plurality of functional modules, for example, a surface manager (surface manager), a media library (media library), a three-dimensional graphics processing library (for example, OpenGL ES), and 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With continuous development of intelligent electronic devices (such as a smartphone, a smartwatch, and a smart tablet), an application of a media type of another electronic device may be operated on a current electronic device between the intelligent electronic devices in a screen sharing manner. However, as applications of the intelligent electronic device are continuously enriched, when the user operates an APP of a media type of another electronic device on the current electronic device, an APP icon of the media type needs to be found in an application list of the another device. When there are a large quantity of APPs, the APP of the media type on another electronic device cannot be quickly found on the current device, and needs to be searched in an application list through page turning, and a search process needs to take a large amount of time. This affects user experience and operation efficiency. For example, the user installs an APP 1 of a media type on the mobile phone, and installs an APP 2 of a media type in the intelligent cockpit. The user sits in the intelligent vehicle, and connects the mobile phone to a display of the intelligent cockpit. After the connection, the display of the intelligent cockpit may display the APP installed on the mobile phone. To start the APP 1 in the smartphone on the display of the intelligent cockpit, the user needs to find an icon of the APP 1 in the smartphone APP list of the intelligent cockpit, and then tap the icon of the APP 1 to start the APP 1. When there are a plurality of pages in the APP list, the user further needs to turn pages for searching, the icon of the APP 1 on the smartphone cannot be quickly and effectively found on the display of the intelligent cockpit.

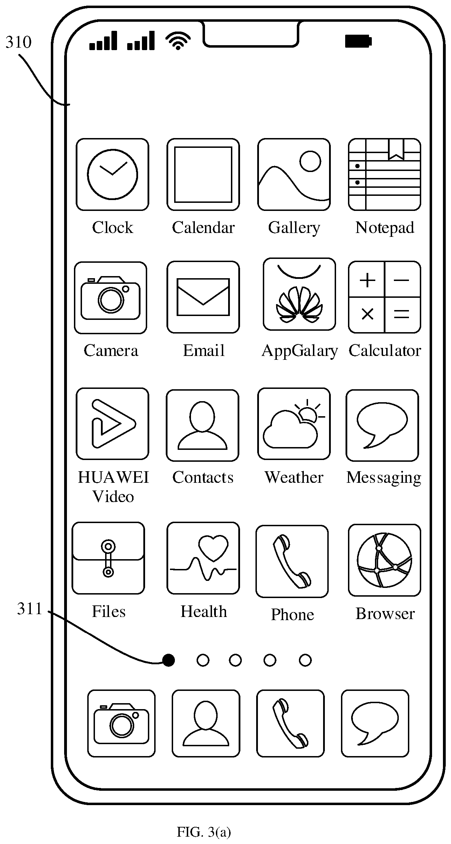

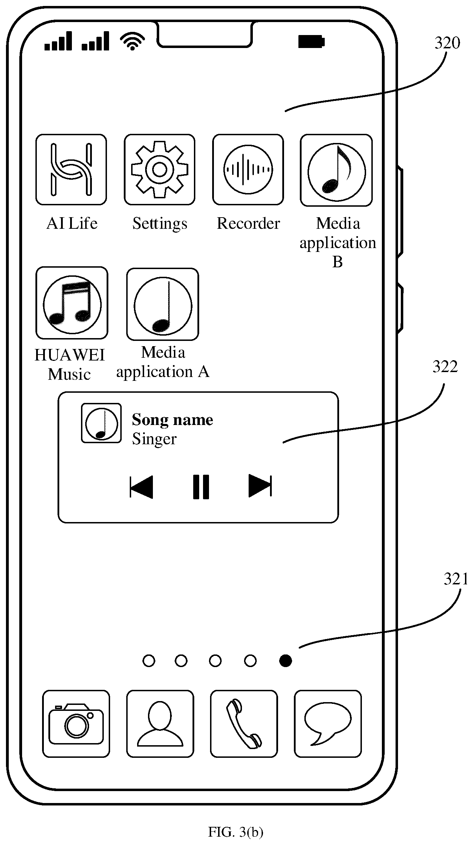

FIG. 3(a) to FIG. 3(c) are a diagram of an application scenario of the foregoing shared screen. The application scenario may include a smart tablet 300 and a smartphone 301. A plurality of APPs are installed on the smartphone 301. As shown in FIG. 3(a), APPs such as HUAWEI Video, Browser, and AppGallery that are installed on the smartphone 301 are displayed on a first page 310 (for example, displayed by using a control 311) of the smartphone. A user slides the first page 310 of the smartphone 301 leftward, and a subsequent page of the smartphone 301 may be displayed. As shown in FIG. 3(b), HUAWEI Music, a media application B, and a media application A that are installed on the smartphone 301 are displayed on a fifth page 320 (for example, displayed by using a control 321) of the smartphone, and a running HUAWEI Music widget 322 is further displayed.

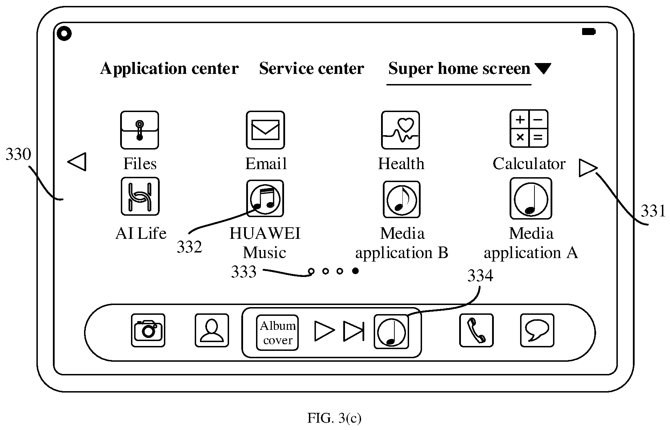

After the smart tablet 300 is connected to the smartphone 301, the smart tablet 300 may obtain an APP installed on the smartphone 301, and display, on a home screen of the smart tablet 300, an icon of the APP installed on the smartphone. As shown in FIG. 3(c), an interface 330 is an interface of the smart tablet 300, and is used to display an APP icon of one or more applications installed on the smartphone 301. In the interface 330, the user may search, on the smart tablet 300 by using a page turning control 338, for the APP installed on the smartphone 301. If the user wants to start, on the smart tablet 300, the HUAWEI Music APP on the smartphone 301, the user needs to tap the page turning control 338 to find an icon 332 of HUAWEI Music on a fourth page (for example, displayed by using a control 333). In response to an operation of tapping the icon 332, running information of HUAWEI Music is displayed in a media playing control application (which may also be referred to as a media playing center) 334.

Based on the foregoing problem, an embodiment of this application provides a method for implementing media playing control. In the method, a first electronic device is connected to a second electronic device, and the first electronic device may obtain and display information about an APP of a media type installed on the second electronic device, and display an icon of the APP based on the information about the APP. In response to tapping the icon of the APP by a user, the APP of the media type installed on the second electronic device may be started on the first electronic device. According to the method, the user can quickly find, on the first electronic device, the APP of the media type installed on the second electronic device, and tap the icon of the APP to obtain and play, from the second electronic device, media data of the APP of the media type corresponding to the icon. Time for the user to search, on the first electronic device, for the APP of the second electronic device is reduced in this method, and user experience is improved.

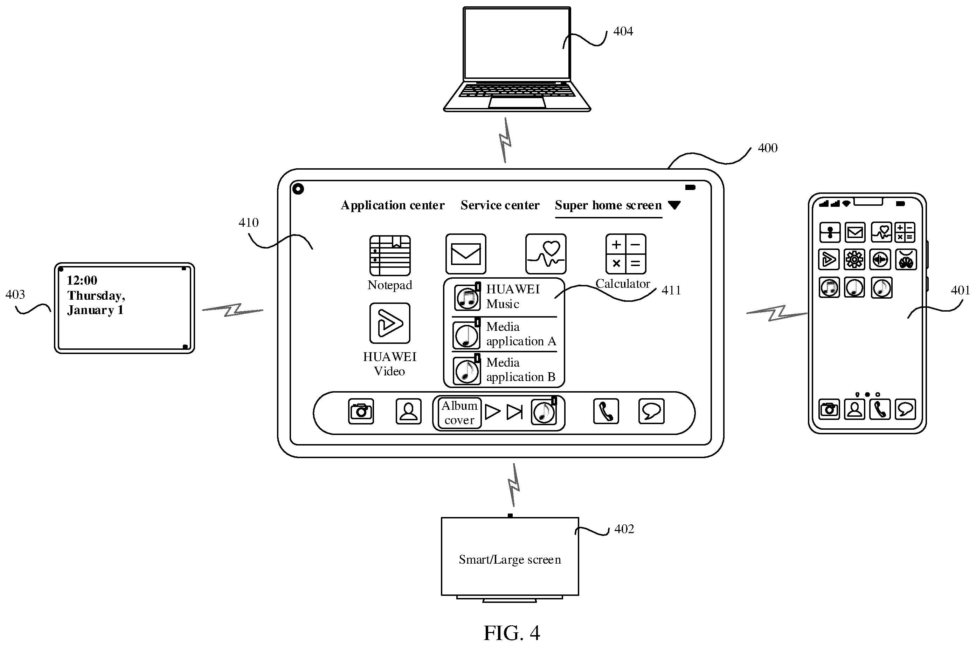

FIG. 4 is a diagram of an architecture of a system for implementing media playing control according to an embodiment of this application. As shown in FIG. 4, the system may include an electronic device 400 (which may also be referred to as a central device, and is a smart tablet herein) and other to-be-connected electronic devices, for example, a smartphone 401, a smart screen 402, a smart tablet 403, and a personal computer 404. It may be understood that the first electronic device is not limited to a smart tablet, for example, may be a smartphone, a smart cockpit, or a television. The other to-be-connected electronic devices are not limited to the devices shown in FIG. 4, for example, may be a smartwatch and a smart band. A specific form of the electronic device that performs the technical solution is not specially limited in embodiments of this application.

The electronic device 400 and the smartphone 401 are used as examples. The electronic device 400 exchanges data through an established short-distance communication connection, or may exchange data with the smartphone 401 through a cloud server. A technology for establishing the short-distance communication connection includes but is not limited to a wireless local area network (wireless local area network, WLAN) (for example, a wireless fidelity (wireless fidelity, Wi-Fi) network), a Bluetooth technology, and an ultra-wideband (ultra-wideband, UWB) technology. A wired communication connection may be further established between the electronic device 400 and the smartphone 401 through a server, a universal serial bus (universal serial bus, USB) port, or the like, to provide a more flexible data transmission manner.

After the electronic device 400 is connected to the smartphone 401, an icon of an APP installed on the smartphone 401 is displayed on the electronic device 400 (as shown in an area 410), and a record of an APP of a media type that is installed on the smartphone 401 and that has been run is displayed in an interface of the electronic device 400 (as shown in an area 411).

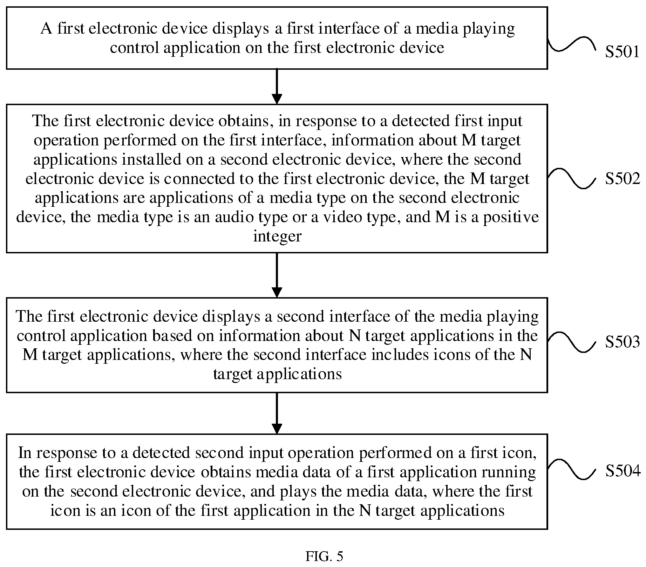

FIG. 5 is a schematic flowchart of a method for implementing a use record of media playing control according to an embodiment of this application. As shown in FIG. 5, the method may include the following steps.

S501: A first electronic device displays a first interface of a media playing control application on the first electronic device.

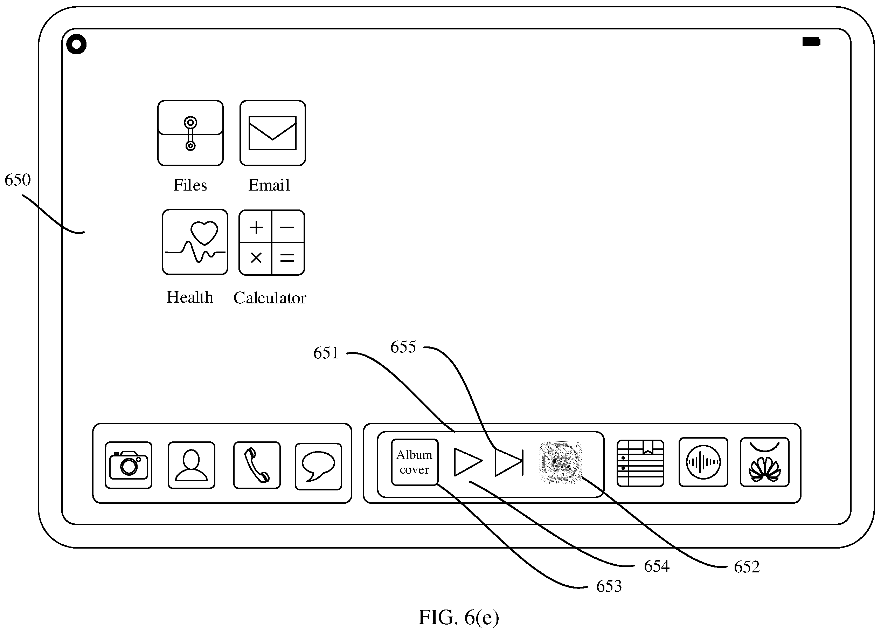

Specifically, before being connected to a second electronic device, the first electronic device displays the media playing control application on a home screen of the first electronic device. As shown in FIG. 6(e), an interface 650 includes a media playing control application 651 of the first electronic device, the application 651 includes an icon 652 of a media application that is being played, an album cover 653 of media that is being played, and a group of controls 654 and 655 that are used to control media playing. The control 654 is used to control playing and pausing of the media, and the control 655 is used to play a next song.

S502: The first electronic device obtains, in response to a detected first input operation performed on the first interface, information about M target applications installed on the second electronic device, where the second electronic device is connected to the first electronic device, the M target applications are applications of a media type on the second electronic device, the media type is an audio type or a video type, and M is a positive integer.

It may be understood that the first electronic device obtains the information about the M target applications installed on the second electronic device. The target application may alternatively be an application of the media type that has been started on the second electronic device. In the following descriptions of this embodiment, the target application is described through the media application that has been started.

In this example, the first electronic device obtains, in response to the detected first input operation performed on the first interface, the information about the started application of the media type installed on the second electronic device. Before the first electronic device obtains the information about the M target applications installed on the second electronic device, the second electronic device needs to be connected to the first electronic device.

Specifically, the first electronic device may be connected to the second electronic device through short-distance communication. A short-distance connection may include wireless communication technologies such as Bluetooth, Wi-Fi, WLAN, and UWB connection, and may also include a USB wired communication technology. Before the second electronic device is connected to the first electronic device, the first electronic device and the second electronic device separately display APPs of the media type that have been run on the respective devices.

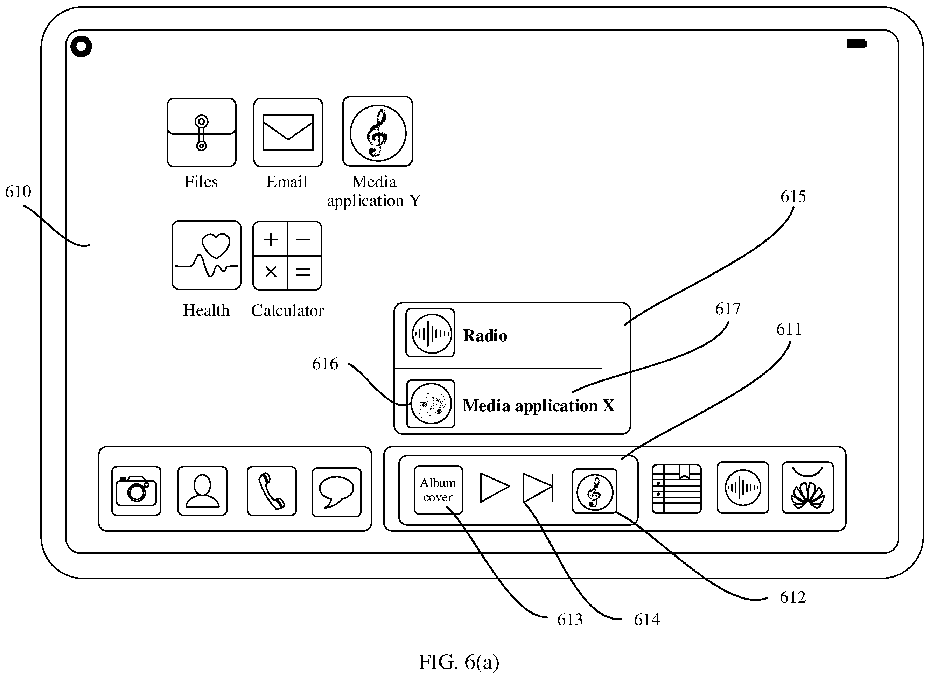

FIG. 6(a) to FIG. 6(d) show a group of graphical user interfaces (graphical user interfaces, GUIs) of APPs of the media type that are being started and that are displayed by media playing centers of the respective devices before the first electronic device is connected to the second electronic device according to an embodiment of this application.

For ease of description, a "media APP installed on the first electronic device" is referred to as a "local APP" below. As shown in FIG. 6(a), an interface 610 includes a media playing control application 611. The media playing control application 611 displays a currently running local APP, that is, a media application Y. An icon control 612 is used to display an application icon of the running media application Y. A picture 613 is used to display an album cover of the running media application Y, and a control 614 is used to control playing (including playing/pausing, a next song, and the like) of the media application Y. When the icon control 612 is tapped, a second area 615 is displayed above the media playing control application 611. The widget 615 is used to display an APP that has been started on the first electronic device, for example, a radio APP and a media application X shown in the second area 615. An icon 616 is used to display an application icon of the media application X, and a text 617 is used to display a name of the media application X.

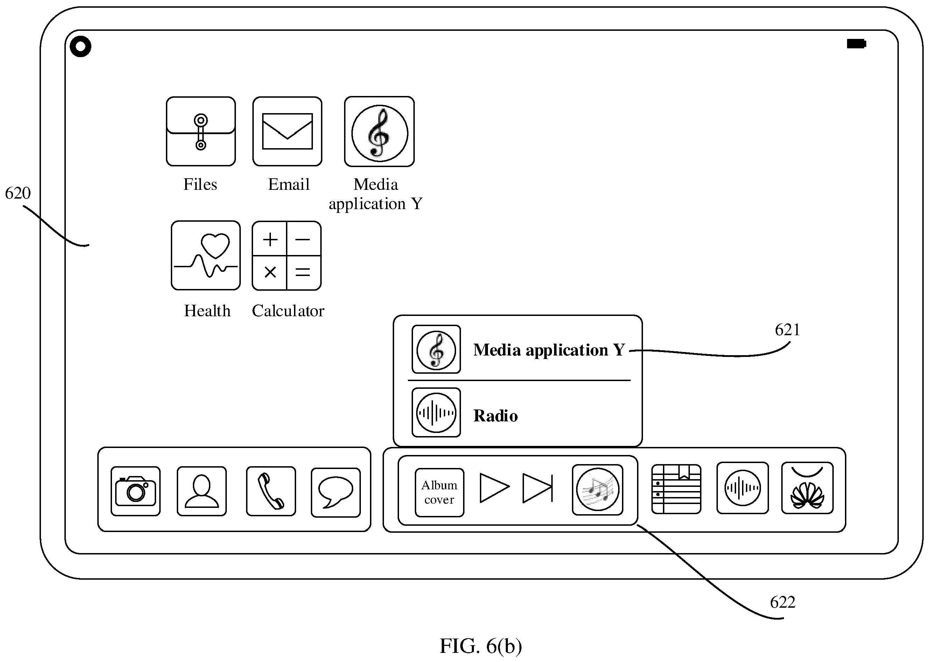

When a user taps the icon 616 of the media application X or taps the name 617 of the media application X, the first electronic device starts the media application X, and replaces running information of the media application Y in the media playing control application 611, to be specific, the picture 613 is replaced with an album cover of the media application X, and the icon control 612 is replaced with the APP icon of the media application X. The media application Y changes from a running status to a background running state, and is displayed in the second area 615. As shown in FIG. 6(b), an interface 620 is an interface of the first electronic device, and displays, in response to an operation of tapping the picture 616 on the first electronic device, effect of switching a media playing control application 622 to the media application X. A control 621 is used to display the media application Y that enters the background running state.

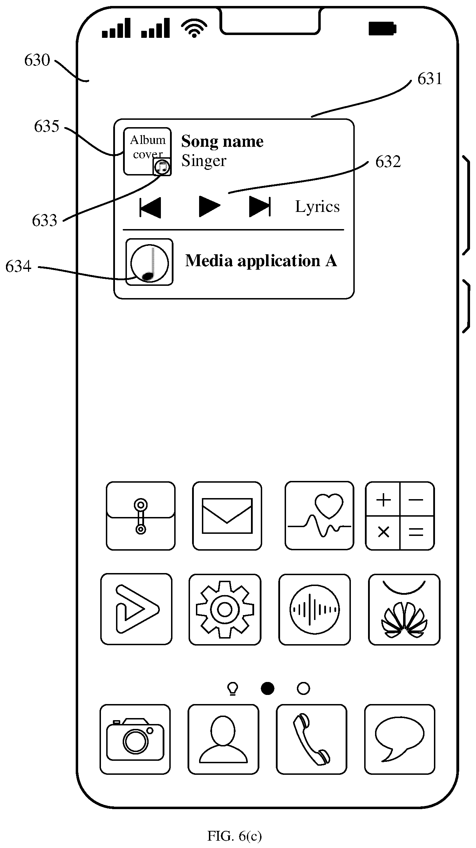

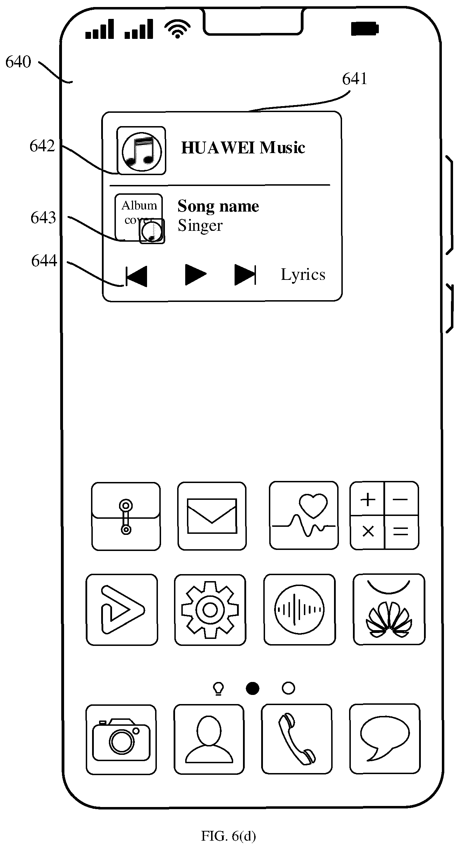

For ease of description, a "media APP that is installed on a device other than the first electronic device and that has been started" is referred to as a "target APP" below. As shown in FIG. 6(c), an interface 630 is an interface displayed before the second electronic device is connected to the first electronic device. A media playing control application 631 displays a HUAWEI Music APP that is currently playing music and a media application A in a background running state that has been started and that pauses music playing, and a playing control 632 is used to control playing (including playing/pausing, a previous/next song, lyric display, and the like) of the HUAWEI Music APP. A picture 633 is used to display an icon of the currently running HUAWEI Music APP, a picture 635 is used to display an album cover of the currently running HUAWEI Music APP, and a control 634 displays an icon and a name of the media application A. When the user taps the icon or the name in the control 634, the second electronic device starts the media application A to play music, and displays a running status of the media application A in a media playing center, as shown by a control 644 in FIG. 6(d). In response to an operation of tapping the control 634, the HUAWEI Music APP enters a background running state, pauses music playing, and no longer displays the playing control 632. As shown in FIG. 6(d), an interface 640 is an interface of the second electronic device, and is used to display, in response to the operation of tapping the picture 634 on the second electronic device, effect of switching the current HUAWEI Music APP and the media application A in the media playing center. A control 642 is used to display the HUAWEI Music APP that enters the background running state, and a control 643 is used to display the media application A that is running in the media playing control application 641.

It can be learned from the foregoing embodiment that, before the first electronic device is connected to the second electronic device, when a media playing control application of each electronic device displays a list of run APPs, the media playing control application of the electronic device displays an APP installed on the electronic device, and does not display an APP installed on another electronic device.

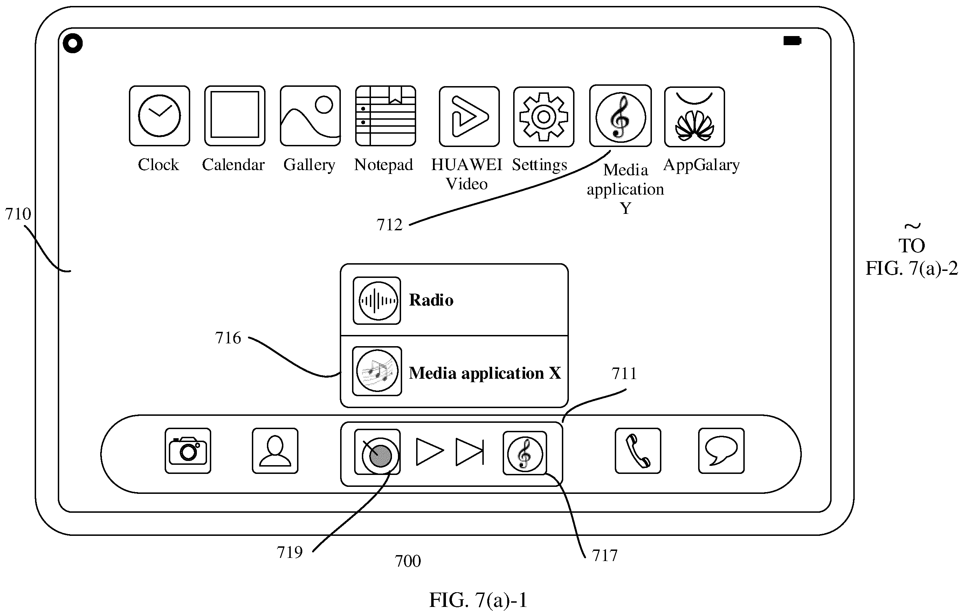

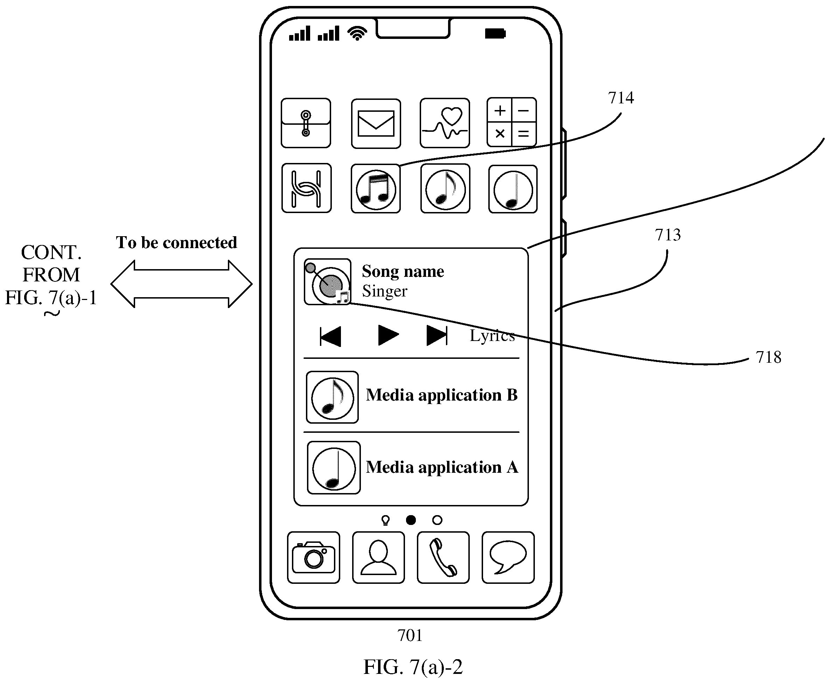

When the first electronic device and the second electronic device are close to each other, and a distance between the first electronic device and the second electronic device is less than a first threshold, the first electronic device may initiate a connection operation to the second electronic device. FIG. 7(a)-1 to FIG. 7(b) show a process of connecting the first electronic device to the second electronic device. As shown in FIG. 7(a)-1 and FIG. 7(a)-2, when a distance between a smart tablet 700 and a smartphone 701 is less than the first threshold, the smart tablet 700 may initiate a connection operation to the smartphone 701 through near field communication.

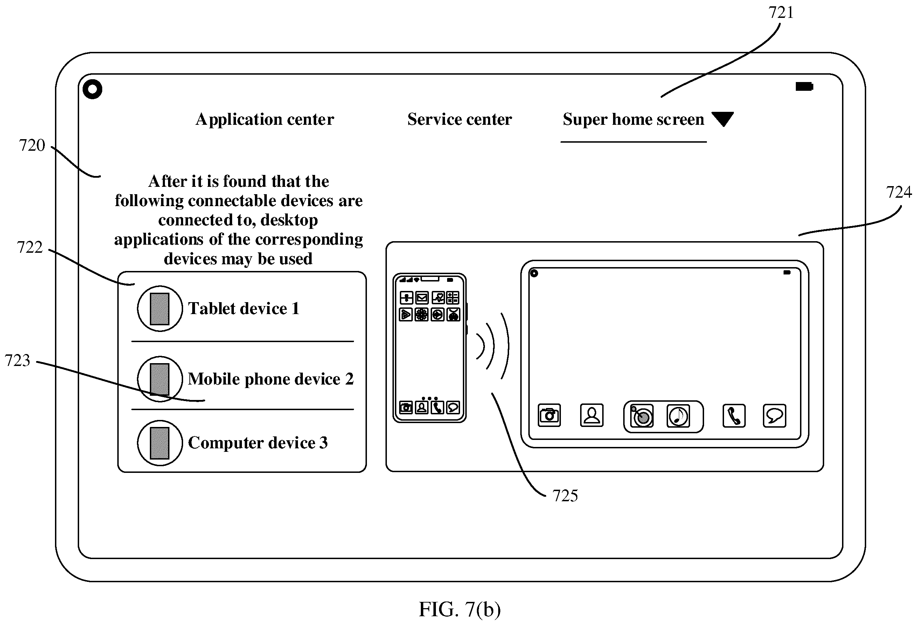

As shown in FIG. 7(b), an interface 720 is used to display a process in which the smart tablet 700 is connected to the smartphone 701 by using a super home screen control 721. When the distance between the smart tablet 700 and the smartphone 701 is less than the first threshold, the super home screen control 721 is started on the smart tablet 700. The control 721 detects the smartphone 701 in response to near field communication, and displays, on a control 722, an icon 723 of the smartphone 701 that needs to be connected. In response to an operation of tapping the icon 723, an interface 724 displays a virtual docking image between the smart tablet 700 and the smartphone 701. A control 725 in the interface 724 continuously blinks, to remind the user that the smart tablet 700 and the smartphone 701 are being connected. When the smart tablet 700 is connected to the smartphone 701, the control 725 no longer blinks, to remind the user that the first electronic device is connected to the second electronic device.

The second electronic device is connected to the first electronic device, and the first electronic device obtains, in response to the first input operation, the information about the M target APPs installed on the second electronic device, where information about the target APP is the audio type or the video type. The second electronic device sends the information about the M target applications installed on the second electronic device to the first electronic device.

Specifically, the user taps the icon control 612 in FIG. 6(a), and obtains, in response to the tap operation, the target APP installed on the second electronic device. As shown in FIG. 6(d), the user has started the HUAWEI Music APP and the media application A on the second electronic device, and the first electronic device obtains information about the two APPs.

In an implementation, a manner in which the first electronic device obtains the information about the M target APPs installed on the second electronic device may alternatively be as follows: After the second electronic device actively sends, to the first electronic device, information about the APPs that are installed on the second electronic device and that have been run, and fails to receive a response message of the first electronic device within specific time, the second electronic device continues to send the information about the target APP installed on the second electronic device to the first electronic device. If a quantity of sending times exceeds a preset quantity of times, the second electronic device stops sending the information to the first electronic device. It is ensured that the first electronic device can obtain the information about the M target APPs from the second electronic device in a scenario in which a network is unstable.

In an implementation, a manner in which the first electronic device obtains the information about the M target APPs installed on the second electronic device may be as follows: The information about the M target APPs on the second electronic device is obtained from a cache of the first electronic device. The information about the M target APPs is information about the M target APPs that is actively sent by the second electronic device and that is received by the first electronic device after the first electronic device is connected to the second electronic device.

Specifically, after the electronic devices are connected, the second electronic device actively sends the information about the M target APPs installed on the second electronic device to the first electronic device. After receiving the information about the M target APPs on the second electronic device, the first electronic device stores the received information about the M target APPs on the second electronic device in the cache of the first electronic device. When obtaining the information about the M target APPs installed on the second electronic device, the first electronic device may directly obtain the information from the cache of the first electronic device, and does not need to obtain the information from the second electronic device. This improves information obtaining efficiency.

It may be understood that, after the first electronic device sends a request message to the second electronic device, and fails to receive a response message from the second electronic device within specific time, the first electronic device continues to send the request message to obtain the information about the M target APPs installed on the second electronic device. If a quantity of sending times exceeds the preset quantity of times, the first electronic device stops sending the request message to the second electronic device. It is ensured that the first electronic device can obtain the information about the M target APPs from the second electronic device in a scenario in which a network is unstable.

In an implementation, APPs in the M target APPs may be latest M APPs that are in a first allowlist on the second electronic device and that are determined based on latest starting time of the APPs.

Specifically, the first allowlist on the second electronic device includes one or more APPs of the media type, and the M target APPs need to be M latest APPs that are determined based on latest starting time of the target APPs and that are in the first allowlist. This avoids a case in which the first electronic device cannot obtain a recently started APP of the media type.

In an implementation, when the information about the M target APPs is sent to the first electronic device, the M target APPs are sorted based on the latest starting time of the target APPs.

Specifically, when the second electronic device sends the information about the M target APPs to the first electronic device, the M target APPs are sorted based on the latest starting time of the target APPs. When the second electronic device performs sorting, a message sent by the second electronic device to the first electronic device may not include the starting time of the target APPs. This simplifies a format of a message between the devices. After receiving the message, the first electronic device may display the message in a sequence of the received target APPs. This simplifies a processing procedure of the first electronic device, and improves display efficiency of the first electronic device. As shown in FIG. 6(c) and FIG. 6(d), the media application A is started after HUAWEI Music. Therefore, in the information that is about the target APP installed on the second electronic device and that is obtained by the first electronic device, information about the media application A is before HUAWEI Music.

S503: The first electronic device displays a second interface of the media playing control application based on information about N target applications in the M target applications, where the second interface includes icons of the N target applications.

Specifically, the first electronic device obtains, from the second electronic device, the information about the M target APPs installed on the second electronic device. The information about the target APP includes an APP icon, an APP package name, and an APP name. The icons of the N target APPs in the second interface of the media playing control application of the first electronic device are displayed based on the obtained information about the APPs of the second electronic device. A value of N is less than or equal to a value of M, and both N and M are positive integers.

It may be understood that the media playing control application may be specifically an audio playing control application. Correspondingly, the M target applications are all applications of the audio type. The media playing control application may alternatively be a video playing control application. Correspondingly, the M target applications are all applications of the video type. According to the two implementations, playing control on audio media may be specially implemented, or playing control on video media may be specially implemented. This is more targeted, and further improves operation efficiency of media playing control.

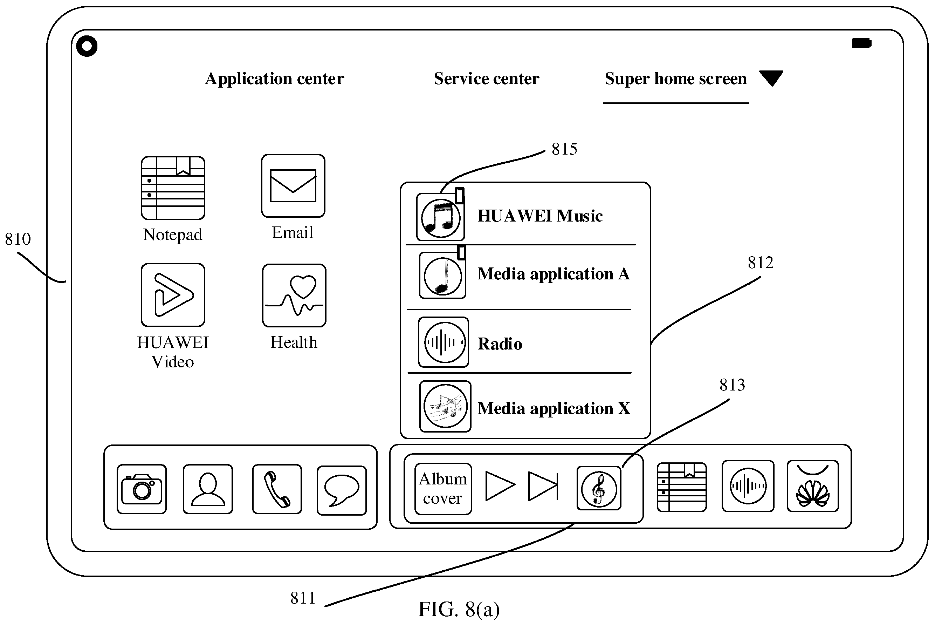

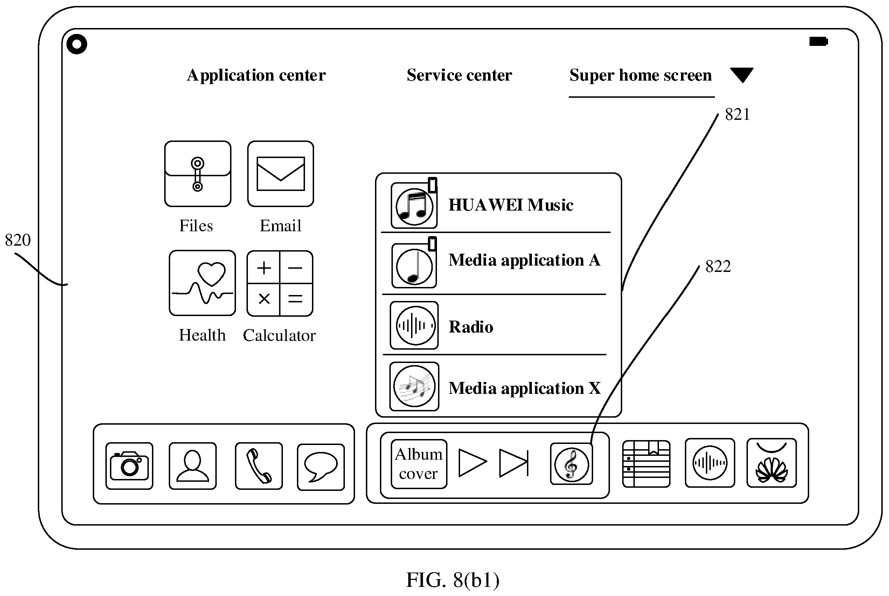

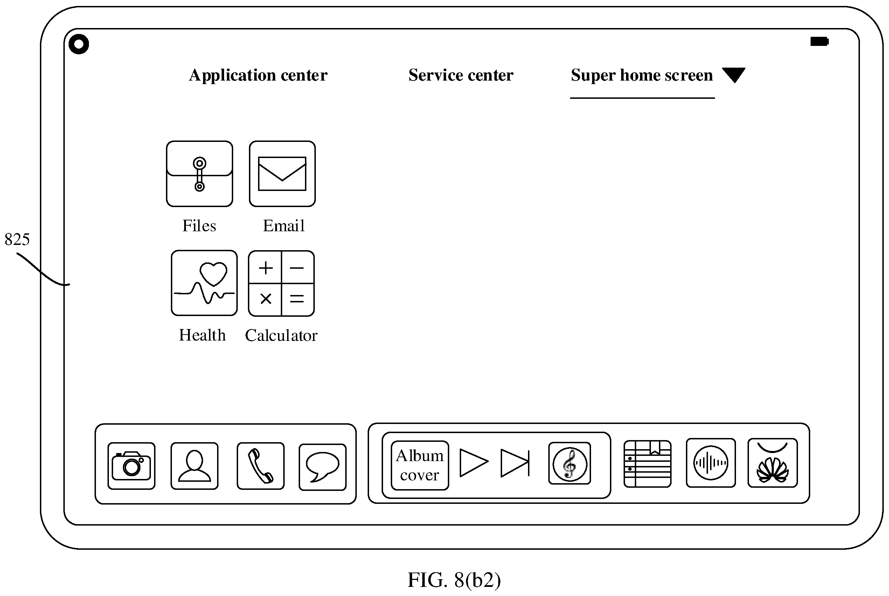

Alternatively, the media playing control application may be specifically an audio/video playing control application. Correspondingly, any one of the M target applications may be an audio application or a video application. For example, some of the M target applications are audio applications, and some applications are video applications. As shown in FIG. 8(a), the second interface of the media playing control application of the first electronic device includes a first area 811 and a second area 812. The first area is used to display a media playing status, includes an icon 813 of a media application that is currently being played, and is used to prompt the user with an application that is being played. The second area is used to display the icons of the N target applications on the second electronic device. As shown in the figure, based on the obtained information about the target APP installed on the second electronic device, the icons of the HUAWEI Music APP and the media application A of the second electronic device are displayed in the area 812 of the second interface. A media application that is being played and a media application that has been played are differentiatedly displayed in different areas of the media playing control application, so that the user can view information about the media applications more conveniently.

It may be understood that, considering a size of a display area, the information that is about the target APP on the second electronic device and that is displayed in the second area 812 may be the N target APPs in the M target APPs, where N is less than or equal to M. For example, the first electronic device receives the HUAWEI Music APP and the media application A, but displays only the icon of the HUAWEI Music APP or the icon of the media application A.

In another implementation, the information that is obtained by the first electronic device from the second electronic device and that is about the M target APPs installed on the second electronic device does not include information about APP icons, and the icons synchronized from the second electronic device to the first electronic device when the devices are connected may be obtained based on package names in the information about the M target APPs.

S504: In response to a detected second input operation performed on a first icon, where the first icon is an icon of a first application in the N target applications, the first electronic device obtains media data of the first application running on the second electronic device, and plays the media data.

Specifically, the first electronic device sends a request to the second electronic device in response to tapping the icon of the first application in the N target applications by the user, to obtain the media data of the first application running on the second electronic device and play the media data. The user may operate a media application of the second electronic device like operating the first electronic device, without increasing learning costs of the user.

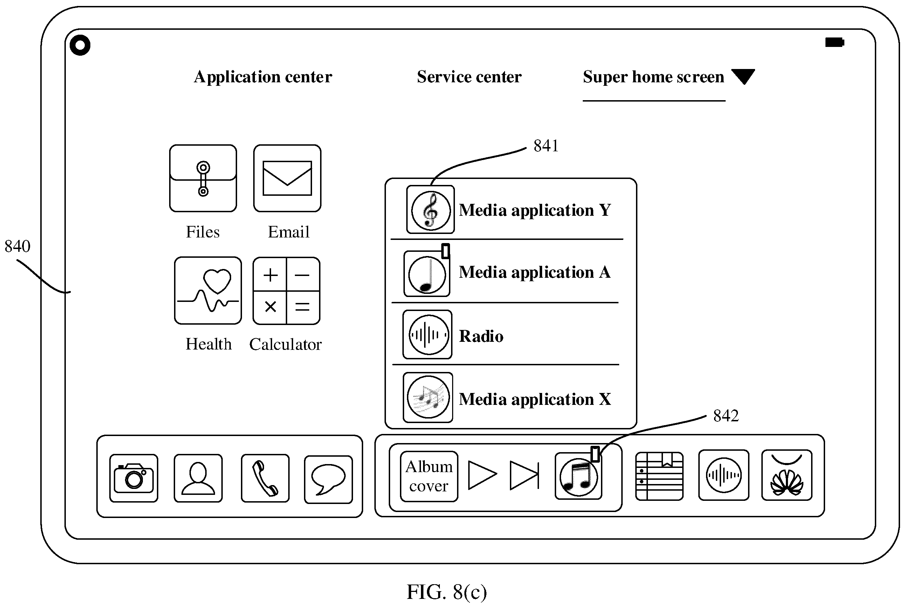

As shown in FIG. 8(a) and FIG. 8(c), in response to tapping the HUAWEI Music icon 815, the first electronic device obtains media information of the HUAWEI Music APP from the second electronic device, and the media playing control application displays an icon 813 of the running APP as the HUAWEI Music icon based on the received media information of the HUAWEI Music APP, to indicate that the HUAWEI Music APP installed on the second electronic device is currently running. The media application Y that is previously run and that is installed on the first electronic device pauses playing, switches to the background for running, and is displayed in the second area. As shown in FIG. 8(c), an icon 841 of the media application Y in an interface 840 is displayed in the second area, and an icon 842 of the HUAWEI Music APP is displayed in a playing interface bar of the media playing control center.

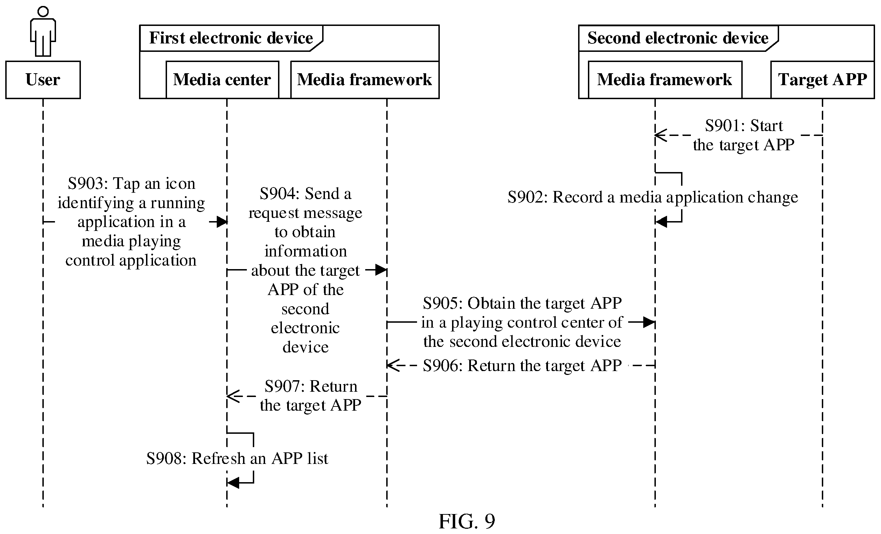

Based on the content described in step S501 and step S504, FIG. 9 is a schematic flowchart of obtaining a target APP according to an embodiment of this application. A procedure of the method may include the following steps.

S901: Start a target APP installed on a second electronic device, and send a notification to a media framework of the second electronic device.

Specifically, a user starts a HUAWEI Music APP installed on the second electronic device, and in response to switching a status of the HUAWEI Music APP from a stopped state to a running status, the second electronic device sends a notification message to the media framework of the second electronic device. It may be understood that the notification message sent to the media framework includes an icon of the APP and a name of the APP.

S902: The media framework of the second electronic device receives the notification message.

Specifically, the media framework of the second electronic device receives a running status change notification message sent by the HUAWEI Music APP, records status change information of the HUAWEI Music APP, and provides an access interface for another external device to obtain information about an APP that is installed on the second electronic device and has been run.

S903: The user taps, on a first electronic device, an icon identifying a running application in a media playing control application, to trigger an operation of obtaining the target APP of the second electronic device.

Specifically, the user taps, on the first electronic device, the icon identifying the running application in the media playing control application, and sends, to the second electronic device, a request for obtaining information about the target APP, for example, taps a picture 815 in FIG. 8(a). The first electronic device sends a request message to obtain the information about the target APP of the second electronic device.

S904: The media playing control application of the first electronic device sends a request message to a media framework of the first electronic device, to obtain the target APP of the second electronic device.

Specifically, in response to a tap operation performed by the user on the first electronic device, the media playing control application of the first electronic device sends, to the media framework of the first electronic device, the request message for obtaining the target APP of the second electronic device, and the media framework uniformly interacts with the outside.

S905: The media framework of the first electronic device sends a request to the media framework of the second electronic device.

Specifically, after the media framework of the first electronic device receives the request that is for obtaining the information about the target APP of the second electronic device and that is sent by the media playing control application of the first electronic device, the media framework of the first electronic device sends the request to the media framework of the second electronic device that has been connected to the first electronic device, to obtain the information about the target APP of the second electronic device.

S906: The media framework of the second electronic device returns the information about the target APP installed on the second electronic device.

Specifically, after the media framework of the second electronic device receives the request message sent by the first electronic device, the media framework of the second electronic device returns the information about the target APP installed on the second electronic device to the media framework of the first electronic device. The returned content includes the icon of the APP and the name of the APP. A returned APP type is a media playing type, for example, a music APP or a video APP.

S907: The media framework of the first electronic device sends, to a media center of the first electronic device, the received information that is about the target APP and that is returned by the second electronic device.

Specifically, after the media framework of the first electronic device receives the target APP returned by the second electronic device, the media framework of the first electronic device returns a second area to the media center of the first electronic device.

S908: The media center of the first electronic device refreshes the target APP.

Specifically, after the media center of the first electronic device receives the target APP of the second electronic device that is returned by the media framework of the first electronic device, the media center of the first electronic device refreshes the target APP in the media playing center.

A procedure in which the first electronic device obtains the information about the target APP of the second electronic device is not limited to the procedure shown in FIG. 9. A specific form of performing the technical solution is not specially limited in embodiments of this application.

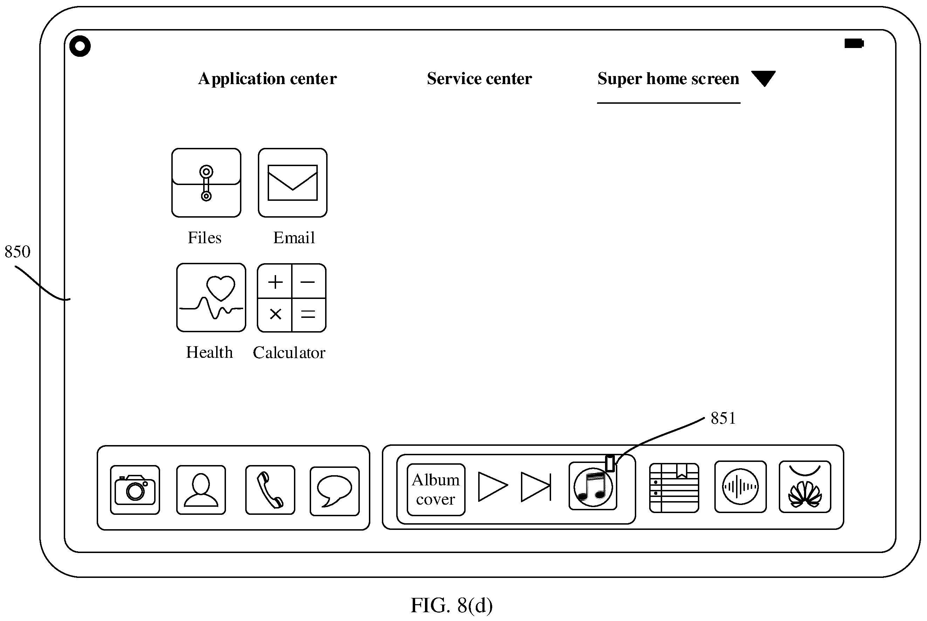

In an implementation, a second area is hidden in the media playing control application in response to tapping an icon of the target APP in the second area. As shown in FIG. 8(a), in response to tapping the HUAWEI Music icon 815, the media playing control application switches the media application Y to the icon of the HUAWEI Music APP in a first area. As shown in FIG. 8(d), the icon of the media application that is being played in the first area of the media playing control application has been switched to the icon of the HUAWEI Music APP. In this case, the second area of the media playing control application has been hidden, so that the user can perform another operation on the home screen.

In an implementation, in response to tapping the icon of the media application that is being played in the first area, display or hiding of the second area may be controlled.

As shown in FIG. 8(b1), an interface 820 displays a second area 821 in the media playing control application. When the user taps an icon 822 in the first area in the media playing control application, the second area 821 is hidden. As shown in FIG. 8(b2), the second area of the media playing control application is no longer displayed in an interface 825.

It may be understood that, when the icon of the target APP is displayed in the second area of the media playing control application based on the information about the target APP, a name of the target APP may be displayed. In this embodiment, the first electronic device displays the name of the target APP on a right side of the icon of the target APP based on the obtained name of the target APP. As shown in FIG. 8(a), in the second area 812, a name "HUAWEI Music" of the APP is displayed on a right side of the icon 815 of the HUAWEI Music APP, and the user can quickly find the APP based on the name of the APP.

In an implementation, an allowlist or a blocklist of the target APP may be set on the first electronic device to filter out the target APP. The allowlist or the blocklist includes one or more APPs. When the obtained target APP of the second electronic device is in the allowlist or is not in the blocklist, the target APP may be displayed in the second area. For example, the first electronic device is in a child mode, and a specified APP 1 needs to be shielded on the first electronic device. If the APP 1 has been started on the second electronic device, the blocklist may be used for filtering. In this way, the APP 1 is not displayed in the second area of the first electronic device even if it is started on the second electronic device. In this manner, the user may flexibly set, on the first electronic device, an APP that is started on the second electronic device and that needs to be displayed, to adapt to different use scenarios.

In an implementation, a maximum quantity of target APPs to be displayed may be set on the first electronic device, to limit a quantity of target APPs to be displayed in the second area. It may be understood that different areas may be obtained by dividing the second area, the different areas are used to display APPs that have been started on different electronic devices, and different maximum quantities may be set for the different areas.

In an implementation, the first electronic device obtains the information about the target APP from the second electronic device, where the quantity of target APPs does not exceed a maximum quantity of sent target APPs that is set by the second electronic device. Specifically, if the second electronic device sets the maximum value of the quantity of sent target APPs to 3, the second electronic device performs sorting based on latest starting time of the APPs, and returns information about the first three APPs to the first electronic device. It may be understood that, if a quantity of started APPs on the second electronic device is less than the maximum value of the quantity of target APPs, information about an actually started APP is returned to the first electronic device. In this implementation, a case in which the first electronic device obtains an invalid or unconcerned target APP of the second electronic device is avoided.

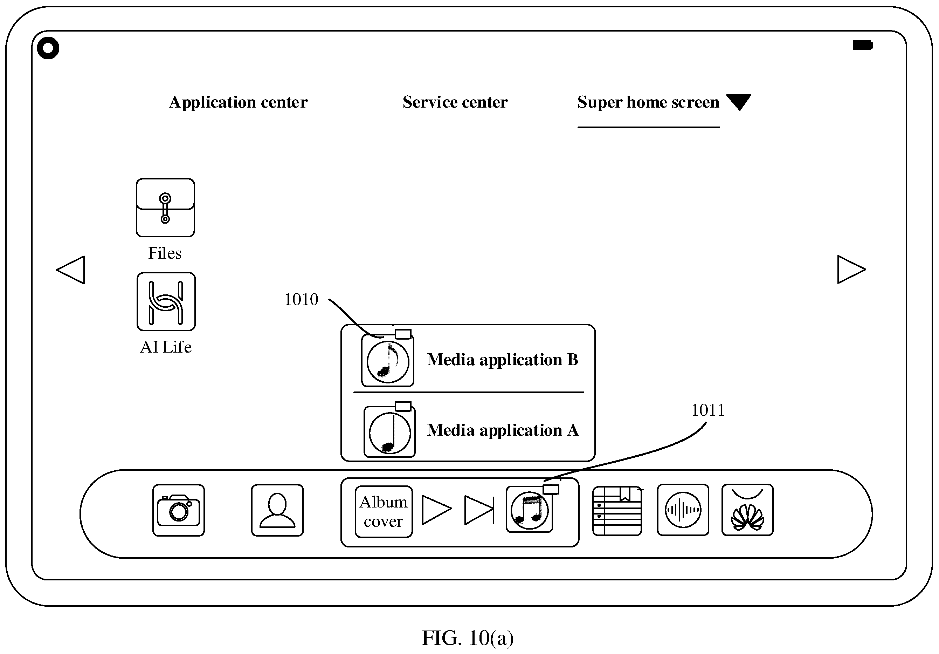

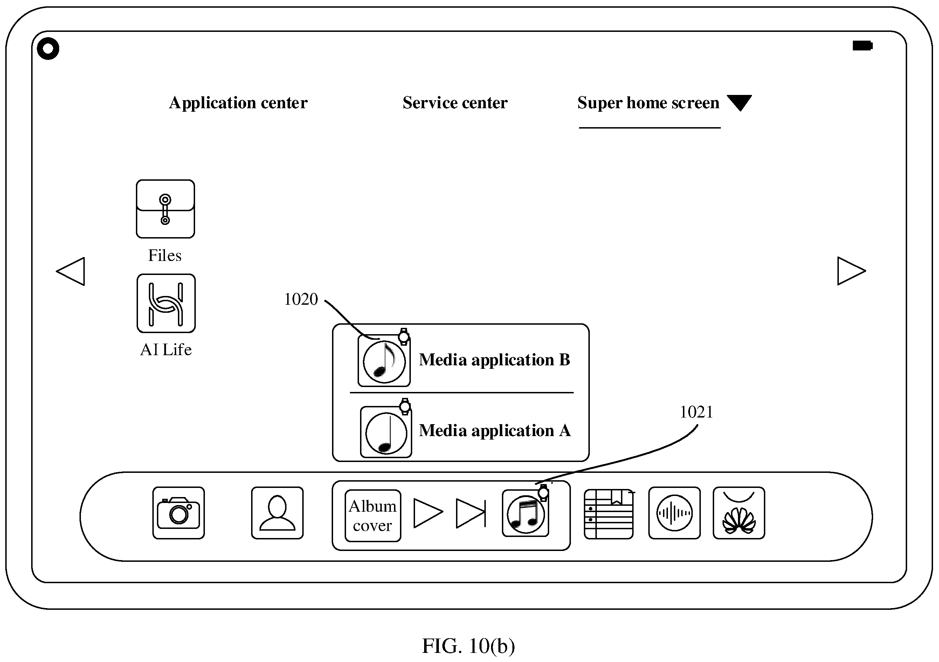

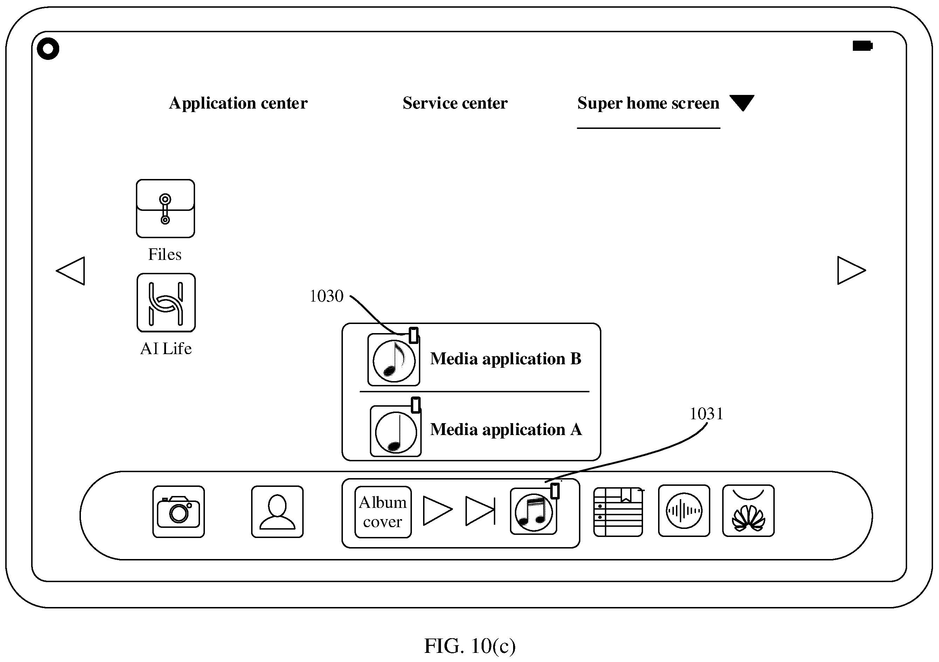

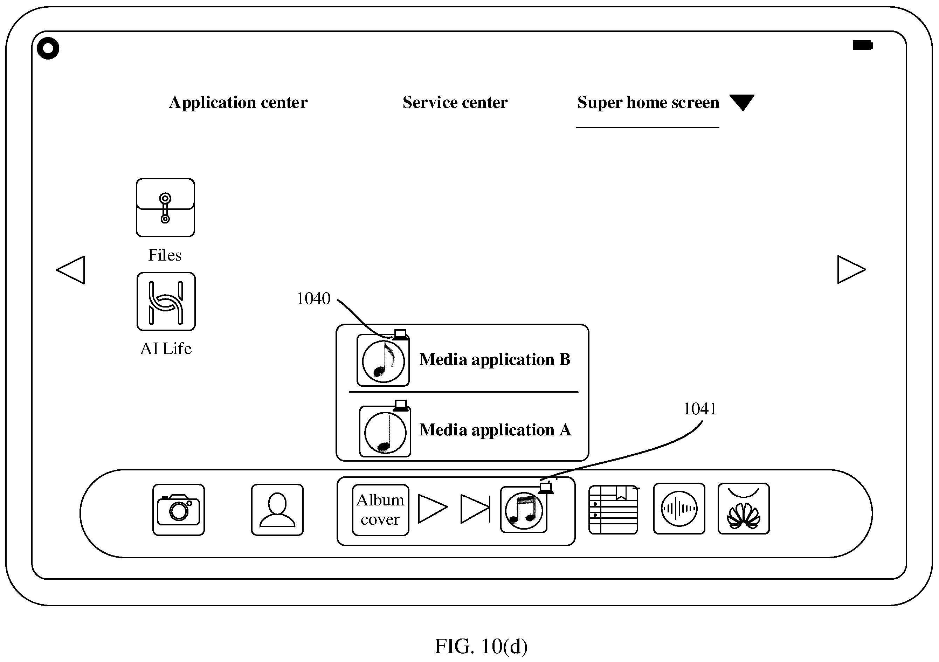

In an implementation, when the first electronic device displays the icon of the target APP, the first electronic device displays, on the icon of the target APP, an icon indicating a type of the second electronic device. In this way, the icon of the target APP may be displayed distinguishing from an icon of a local APP. For example, the icon identifying the type of the second electronic device is displayed in an upper right corner of the icon of the target APP. For another example, the icon identifying the type of the second electronic device may alternatively be displayed in a highlight, grayscale, or shadow manner. For example, as shown in FIG. 10(a), the first electronic device is connected to a large screen (smart screen) device, an icon 1010 indicates that an APP in a second area of the first electronic device is from the large screen device, and an icon 1011 indicates that a media playing center in the first electronic device is running a large screen APP. Similarly, icons in FIG. 10(b), FIG. 10(c), and FIG. 10(d) respectively indicates that the first electronic device is connected to a smartwatch, a smartphone, and a notebook computer. Icons displayed by the first electronic device are not limited to the large screen, the smartwatch, the smartphone, and the notebook computer presented in FIG. 10(a) to FIG. 10(f), and may further include a smart cockpit, a smart tablet, and the like. A specific form of the electronic device that performs the technical solution is not specially limited in embodiments of this application.

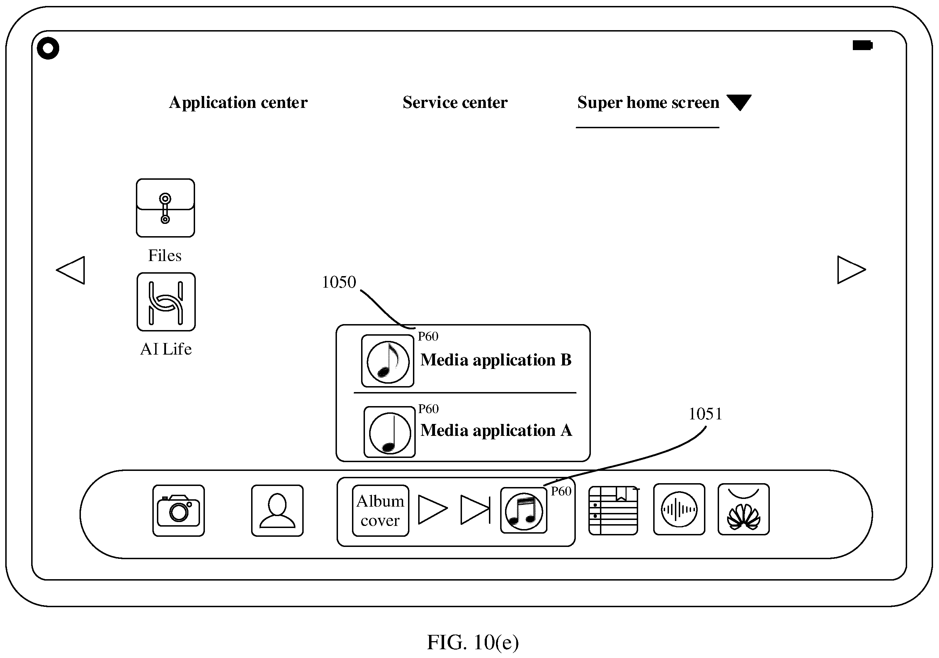

In an implementation, when the first electronic device displays the icon of the target APP, the first electronic device displays, on the icon of the target APP, an icon indicating a model of the second electronic device. In this way, the user can conveniently view the model corresponding to the target APP. For example, information identifying the model of the second electronic device is displayed in an upper right corner of the icon of the target APP. For example, as shown in FIG. 10(e), the first electronic device is connected to a smartphone, a model of the smartphone is P60, a text 1050 indicates that an APP in the second area of the first electronic device is from an electronic device whose model is P60, and a text 1051 indicates that the media playing center in the first electronic device is running an APP on the P60 model.

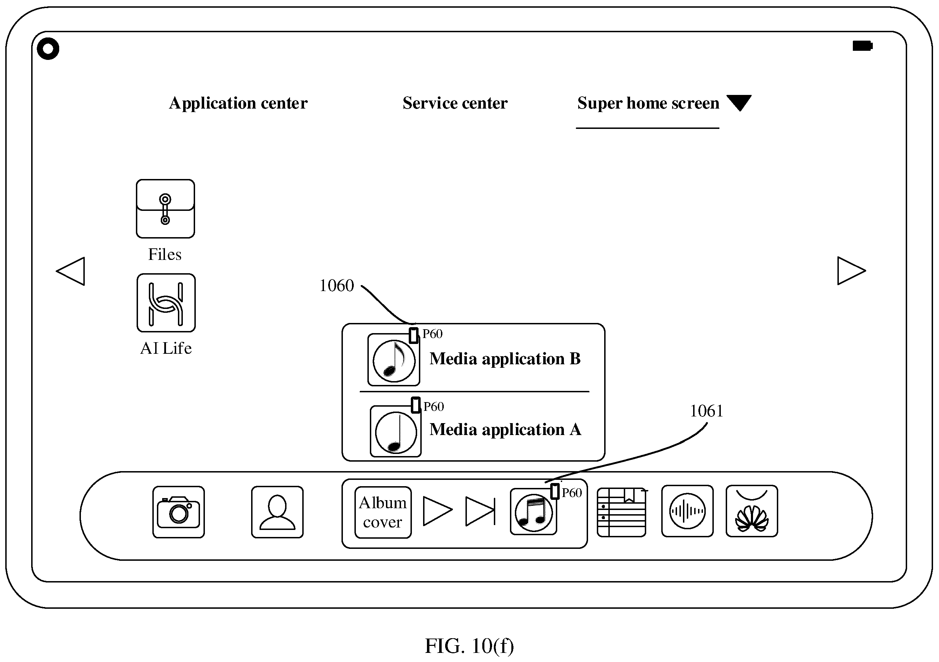

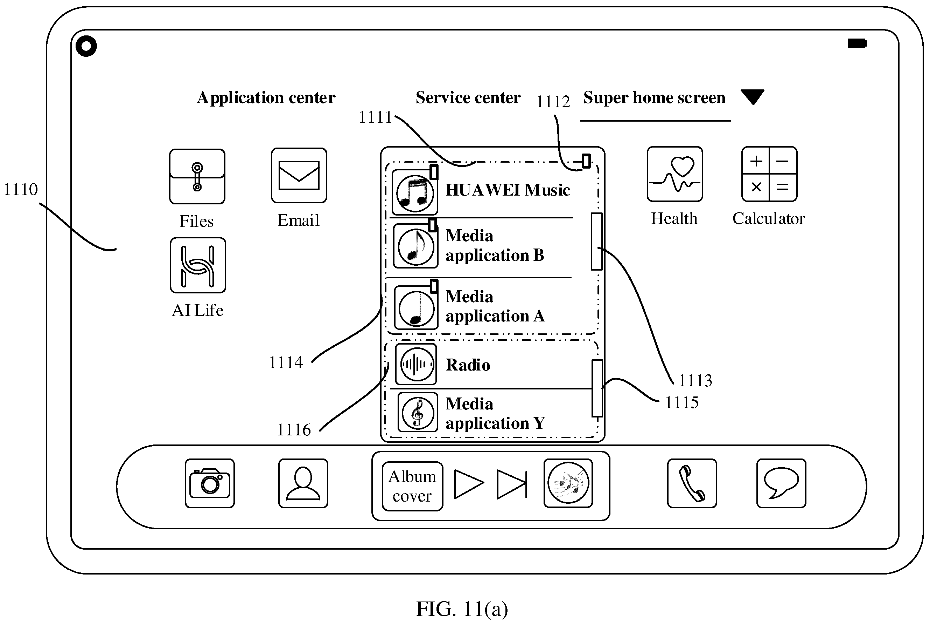

Further, when the first electronic device displays the icon of the target APP, the first electronic device may further display both an icon of a device type and model information on the icon of the APP. As shown in FIG. 10(f), a model corresponding to a device is displayed on a right side of an icon 1060 of a type of the electronic device. In this display manner, the user can more conveniently select an APP that needs to be started. This improves user experience. In an implementation, when the first electronic device displays the icon of the target APP, the first electronic device may perform area display based on a device source. As shown in FIG. 11(a), an interface 1110 is an interface of the first electronic device, and includes a second area 1114. The second area 1114 is displayed by area based on an application source, and includes an area 1111 and an area 1116.

The area 1111 displays target APPs, including a HUAWEI Music APP, a media application B, and a media application A. An icon 1112 of a connected device is displayed in an upper right corner of the area 1111. The icon 1112 indicates that an APP in the area is a target APP from the second electronic device. In this way, the APP in the area does not need to display, in an upper right corner of the APP, an icon indicating the second electronic device. This simplifies display information of the target APP. When there are a large quantity of target APPs in the area 1111 and the target APPs cannot be completely displayed, a scroll bar 1113 may be further displayed in the area 1111, so that the user slides the scroll bar in the area to obtain a target APP that is not displayed.

Local APPs are displayed in the area 1116, including a radio APP and a media application Y. Because the local APPs are displayed in the area 1116, the icon of the device type does not need to be displayed in the upper right corner. Similar to the area 1111, when there are a large quantity of local APPs in the area and the local APPs cannot be completely displayed, a scroll bar 1115 may be further displayed in the area 1116, so that the user slides the scroll bar in the area to obtain a local APP that is not displayed.

It may be understood that, when the first electronic device is connected to a plurality of electronic devices, for example, the first electronic device is connected to a third electronic device while the first electronic device is connected to the second electronic device, areas of the plurality of electronic devices are displayed in the second area, so that the user selects, in an area to which each electronic device belongs, an APP corresponding to the electronic device.

Further, when the user taps any APP icon or APP name in the second area, the first electronic device starts the APP in response to an operation of tapping the APP icon or the APP name. In this case, display of the APP icon in the second area changes, and the display change of the icon is performed only in each area, and the areas do not affect each other.

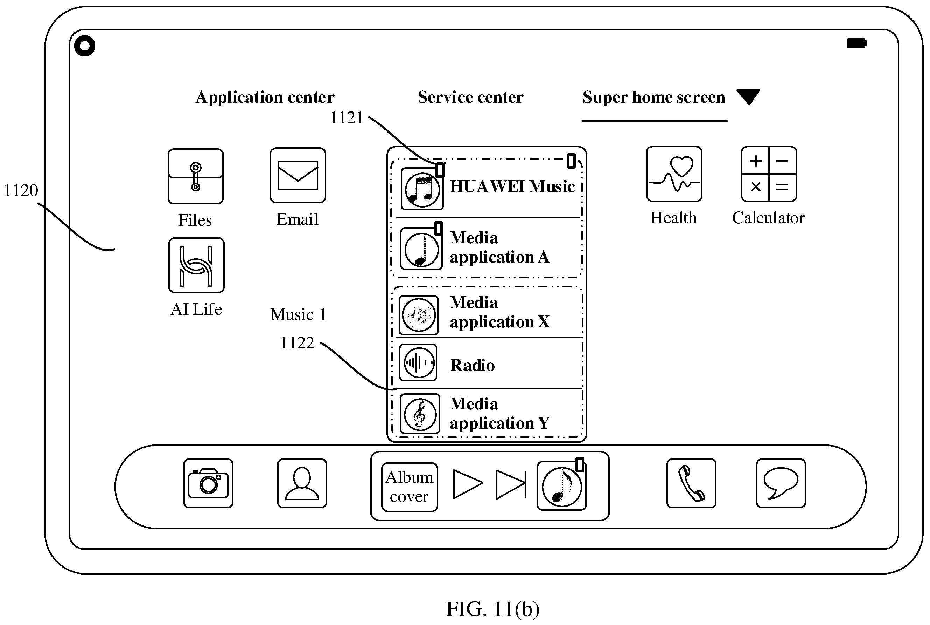

As shown in FIG. 11(b), an interface 1120 displays an interface displayed after the user taps an icon of the media application B in the area 1111 in the interface in FIG. 11(a). In response to an operation of tapping the icon of the media application B in the area 1111, the first electronic device starts the media application B, displays the media application B as a currently running APP in the media playing center, and deletes the media application B from the area 1111. As shown in FIG. 11(b), the icon and a name of the media application B are not displayed in an sub-area 1121. However, an icon and a name of a media application X that has been switched to the background for running are displayed in the area 1122 in which the local APPs are displayed.

It can also be learned from the foregoing descriptions that the second area of the second interface of the first electronic device includes a first sub-area and a second sub-area. The first sub-area is used to display an icon of a target APP, and the second sub-area is used to display an icon of an APP of a media type that is installed on the first electronic device.

Specifically, the second area of the second interface of the first electronic device includes two sub-areas: the first sub-area and the second sub-area. The first sub-area is used to display an icon of a target APP of the second electronic device, and the user may select, in the sub-area, an APP installed on the second electronic device. The second sub-area is used to display an icon of an APP of a media type that is installed on the first electronic device, and the user may select, in the sub-area, the APP of the media type that is installed on the first electronic device. Areas of the first electronic device and the second electronic device are separated by using different sub-areas, so that the user can view icons of different electronic devices in different areas. This more conveniently selects APPs installed on different electronic devices. As shown in FIG. 11(b), the HUAWEI Music APP and the media application A on the second electronic device are displayed in the first sub-area 1121, and the media application X, the radio APP, and the media application Y on the first electronic device are displayed in the second sub-area 1122.

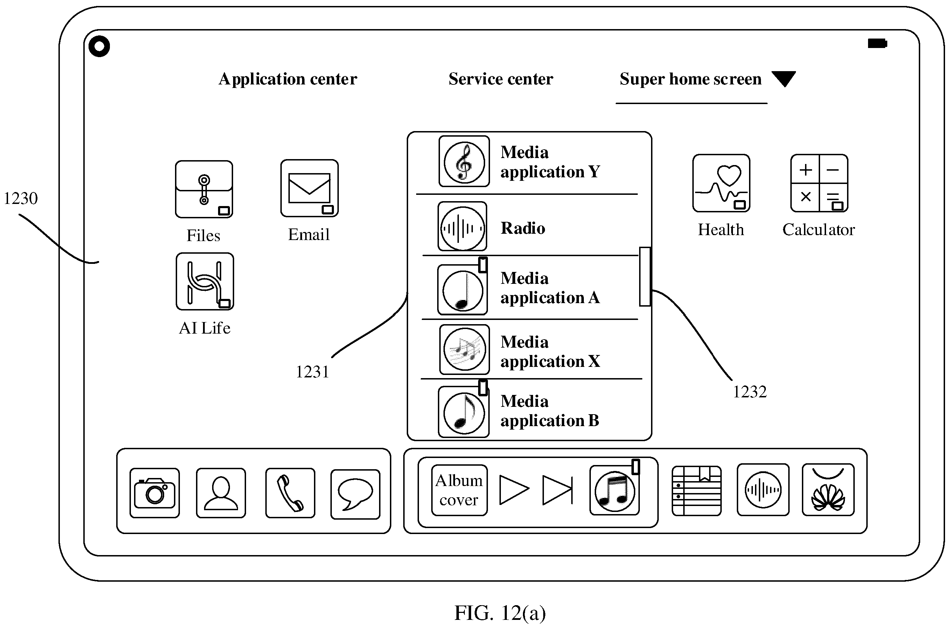

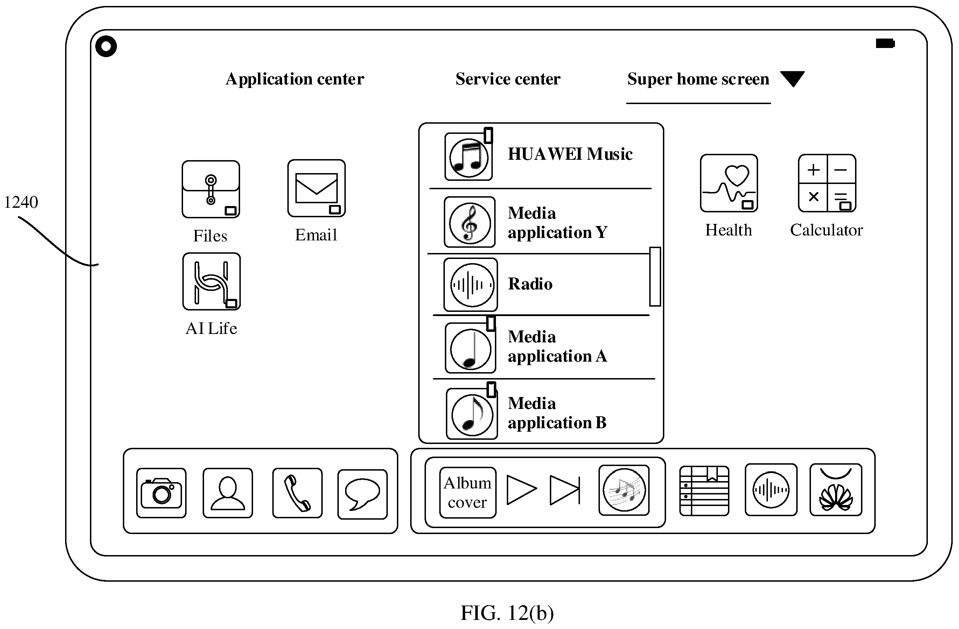

In an implementation, when the target APP is displayed in the second area, the local APP and the target APP may be arranged and displayed in a mixed manner, in other words, the local APP and the target APP are displayed in an area not based on the electronic devices to which the APPs belong. It may be understood that, in the second area, target APPs on a plurality of devices and local APPs may be displayed in a mixed manner. As shown in FIG. 12(a), a local APP installed on the first electronic device and the target APP installed on the second electronic device are displayed in a mixed manner in a second area 1231. When there are a large quantity of APPs in a control 1231 and the APPs cannot be completely displayed, a scroll bar control 1232 may be further displayed in the control 1231. In response to tapping, by the user, the APP icon or the APP name of the media application X in the control 1231, the media playing center displays a case in which both the running APP and the APP in the second area 1231 change, and change effect thereof is shown in FIG. 12(b). The media application X is displayed in the media playing center, which indicates that the media playing center is running the media application X. The HUAWEI Music APP, a target APP on another device, and the local APP are displayed in the second area together.

It may be understood that, when the user starts an application APP 3 of a media type, the APP 3 does not belong to the M target applications and belongs to the first allowlist. In this case, the second electronic device sends an update message to the first electronic device, where the update message includes updated information about the M target applications, and the updated information about the M target applications includes information about the APP 3. The first electronic device receives the update message sent by the second electronic device. Because the update message includes the information about the APP 3, the first electronic device may display an icon of the APP 3 in the second area based on the update message.

Specifically, when a status of the target APP on the second electronic device changes, for example, the target APP is uninstalled or started on the second electronic device, the second electronic device actively sends an update message to the first electronic device, where the update message is used to notify the first electronic device to update the target APP. The first electronic device receives the update message sent by the second electronic device, and displays an updated icon of the target APP in a target area based on the update message. The update message may be data of all target APPs sent by the second electronic device. The first electronic device updates icons of all the target APPs in the target area based on the data of all the target APPs. The method is easy to implement, and the first electronic device can simply and quickly update the icons of the target APPs in the target area. Alternatively, the update message may be data of a single target APP. The first electronic device updates an icon of the single target APP based on indication information of the single target APP in the update message. In this method, the icon of the single target APP is updated, so that a size of an interaction packet between devices can be reduced.

In an implementation, the second electronic device sends update information to the first electronic device in response to starting an APP by the second electronic device.

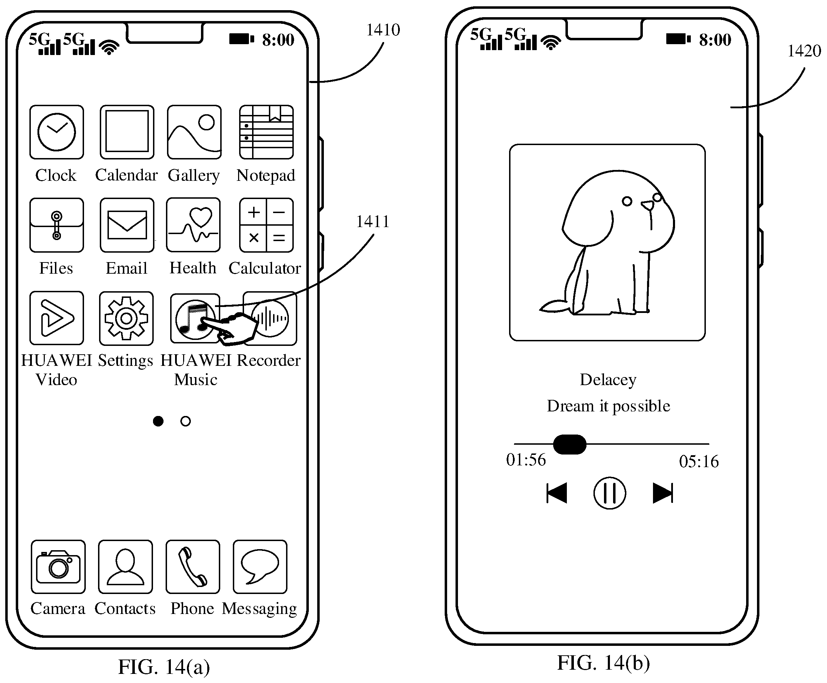

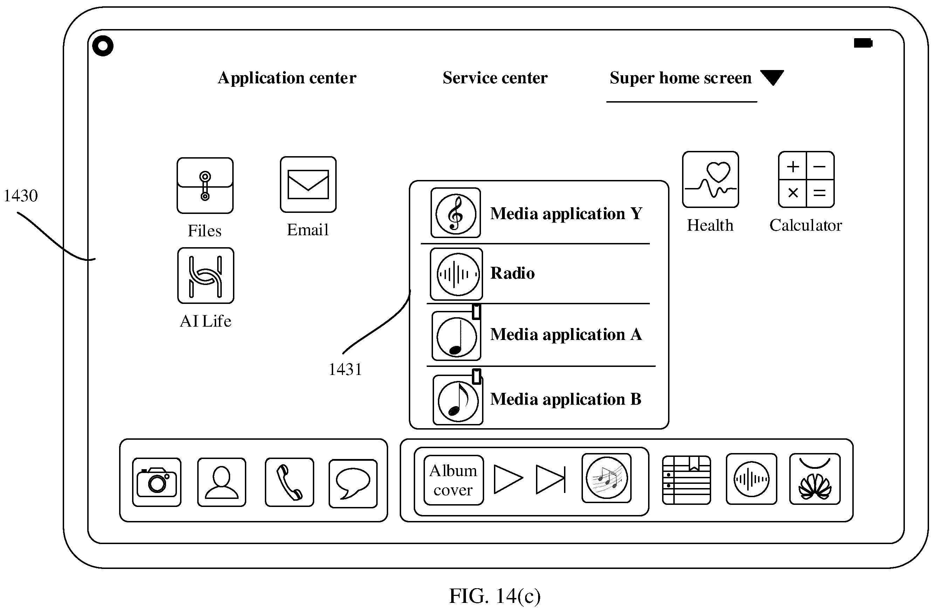

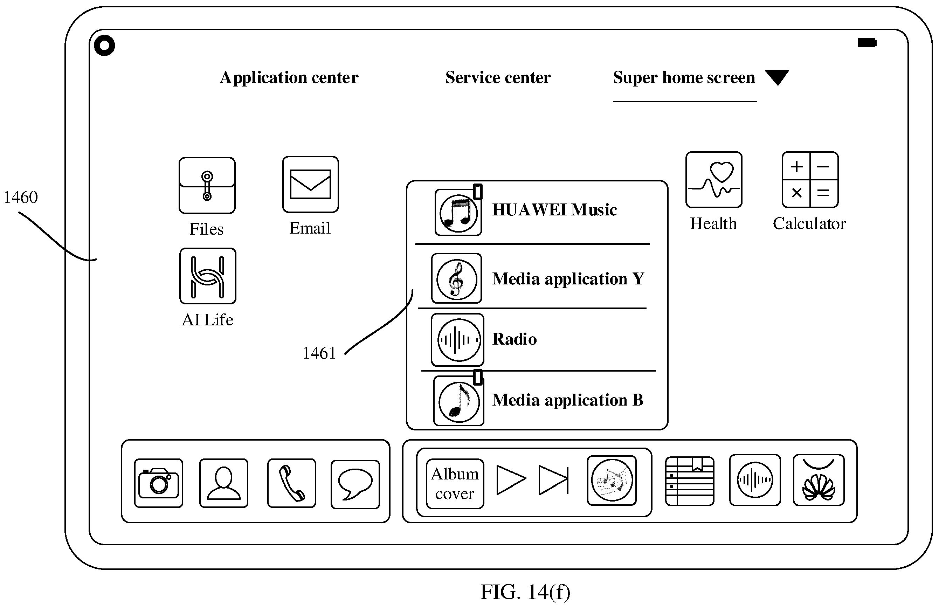

Specifically, as shown in FIG. 14(c), the HUAWEI Music APP is not displayed in the second area of the first electronic device. This indicates that the HUAWEI Music APP has not been run on the second electronic device. As shown in FIG. 14(a), an interface 1410 is displayed on the second electronic device, and the interface includes an icon 1411 of the HUAWEI Music APP. The second electronic device starts the HUAWEI Music APP on the second electronic device in response to detecting an operation of tapping the icon 1411 by the user. As shown in FIG. 14(b), an interface 1420 is displayed after the second electronic device starts the HUAWEI Music APP, and a screen of the second electronic device displays running information of the HUAWEI Music APP, for example, information such as album playing, playing progress, and playing control.

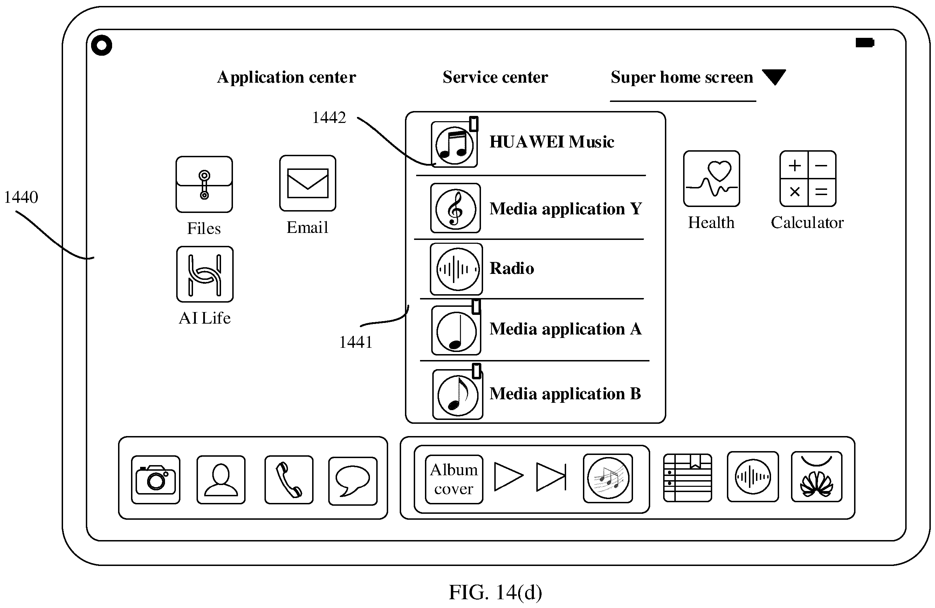

When the second electronic device starts the HUAWEI Music APP, the second electronic device sends a notification message through the media framework of the second electronic device to notify the first electronic device. After the first electronic device receives the information about the target APP, the first electronic device refreshes the second area of the media playing center, and displays the icon of the HUAWEI Music APP in the second area. As shown in FIG. 14(d), an interface 1440 is displayed on the first electronic device, and an icon of the HUAWEI Music APP is displayed in a second area 1441 in the interface 1440, and is displayed at the top of the second area based on latest starting time.

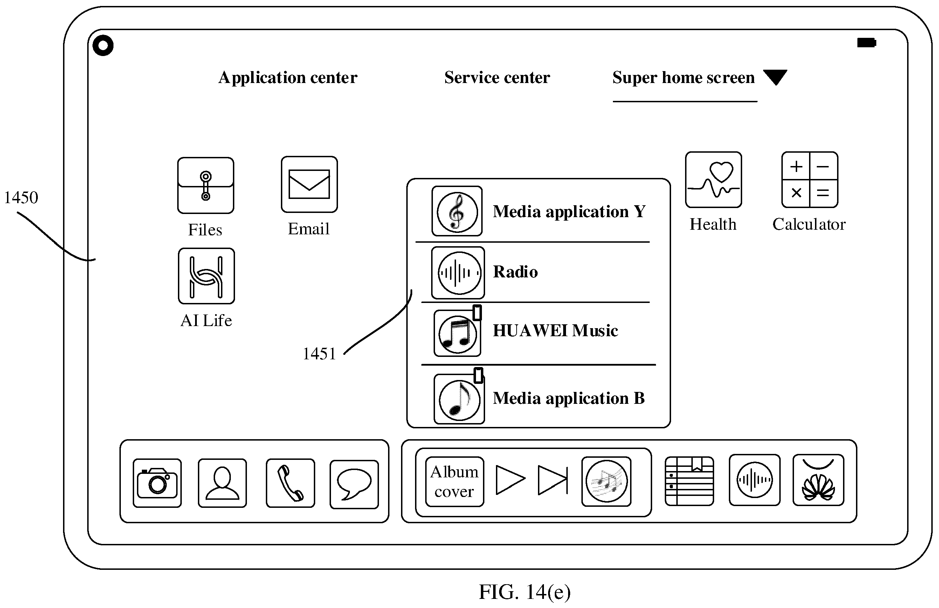

It may be understood that, if the HUAWEI Music APP has been displayed in the second area of the first electronic device, as shown in FIG. 14(e), the HUAWEI Music APP displayed in the second area 1451 in the interface 1450 is not arranged at the top. When the user starts the second electronic device again (for example, switches from a background running state to a foreground running status), the second electronic device still sends update information to the first electronic device, and displays the HUAWEI Music APP at the top of the second area based on a latest starting time sequence, as shown in FIG. 14(e), the HUAWEI Music APP displayed in a second area 1461 in the interface 1460 is arranged at the top.

In this embodiment, when a status of the target APP on the second electronic device changes, changed information about the target APP is sent to the media framework of the first electronic device through the media framework of the second electronic device. If the media playing center needs to obtain the status change information of the target APP on the second electronic device, the media playing center needs to send a registration callback request to the media framework of the first electronic device. According to the registration callback method, after the media framework of the first electronic device receives the status change information of the target APP on the second electronic device, the media framework of the first electronic device sends the changed information about the target APP to a module that sends a registration message.

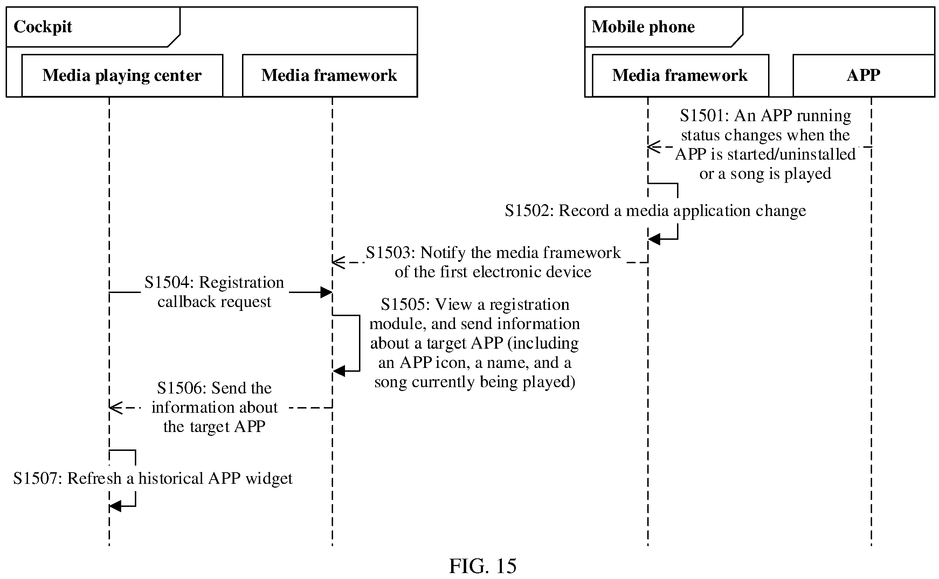

For example, when the second electronic device starts the HUAWEI Music APP, the media framework of the second electronic device sends the information about the HUAWEI Music APP to the media framework of the first electronic device. The media playing center of the first electronic device has been registered with the media framework of the first electronic device, the media framework sends the received message of the HUAWEI Music APP to the media playing control center. After the media playing control center receives the message of the target APP, the media playing control center refreshes the second area to display the latest icon of the target APP. Specific steps are shown in FIG. 15.

S1501: When an APP running status of a second electronic device changes, notify a media framework of the second electronic device.

S1502: The media framework of the second electronic device receives the recorded APP change status.

Implementation processes of S1501 and S1502 are consistent with those of steps S901 and S902 in FIG. 9. For a specific implementation process, refer to the description content in FIG. 9. Details are not described herein again.

S1503: The media framework of the second electronic device actively sends information about a target APP to a media framework of a first electronic device.

S1504: A media playing center of the first electronic device sends a registration callback request to the media framework of the first electronic device.

Specifically, the registration callback request sent by the media playing center of the first electronic device to the media framework of the first electronic device is equivalent to registration in the media framework. If there is change information about the target APP, the media playing center needs to be notified.

S1505: The media framework of the first electronic device views a registration module.

Specifically, after receiving the information about the target APP actively sent by the media framework of the second electronic device, the media framework of the first electronic device views a module registered in the media framework, and sends the received the information about the target APP to the registered module.

S1506: The media framework of the first electronic device sends the information about the target APP to the media playing center.

Specifically, the media framework of the first electronic device sends the information about the target APP to the media playing center based on the registration information of the media playing center.

S1507: After receiving a second area of the second electronic device that is actively sent by the media framework of the first electronic device, the media center of the first electronic device refreshes a second area of the media playing center, and combines the second area with the local APP program for display.

That the first electronic device obtains an update message of the second electronic device is not limited to the procedure shown in FIG. 15. A specific form of performing the technical solution is not specially limited in embodiments of this application.

In another implementation, in response to that the first electronic device starts an APP that is installed on the second electronic device and that does not belong to the M target APPs, an icon of the APP is displayed in the second area of the first electronic device.

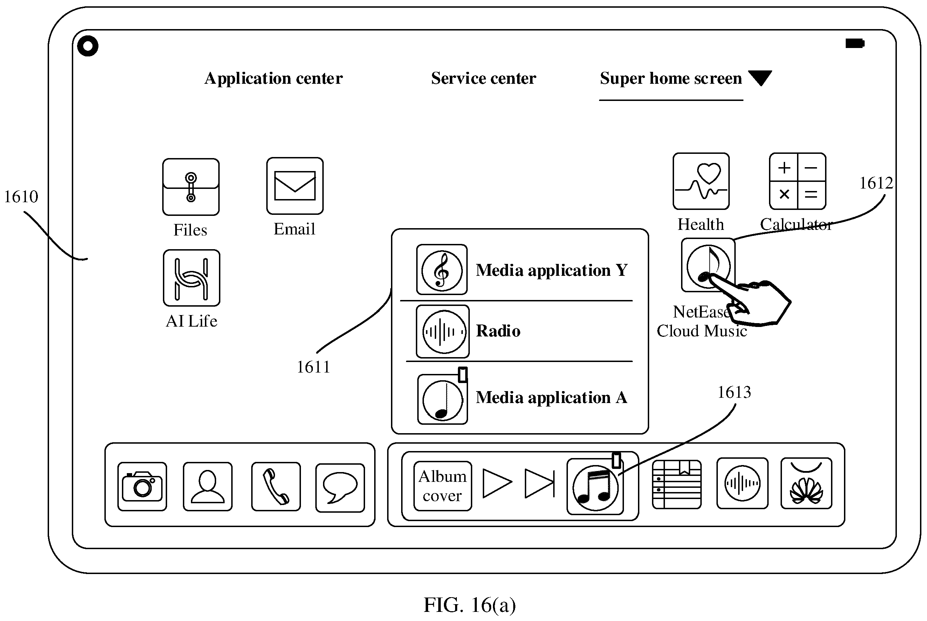

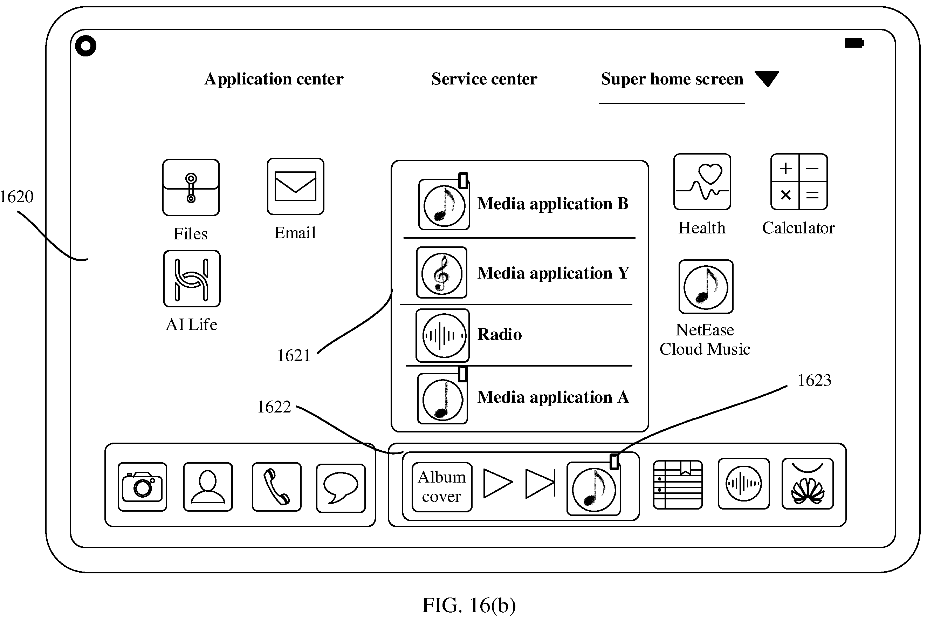

Specifically, as shown in FIG. 16(a), a media application B is not displayed in the second area of the first electronic device, which indicates that the media application B has not been started on the first electronic device. As shown in FIG. 16(a), an interface 1610 is displayed on the first electronic device, and the interface includes an icon 1612 of the media application B installed on the second electronic device. The first electronic device runs the media application B on the first electronic device in response to detecting an operation of tapping the icon 1612 by the user. As shown in FIG. 16(b), an interface 1620 displayed on the first electronic device includes a media playing control 1622, and an icon 1623 of the media application B in the control 1622 displays a case in which a running APP is the media application B.

After the first electronic device runs the media application B, the first electronic device refreshes the second area of the media playing center, and displays the icon of the media application B in the second area. As shown in FIG. 16(b), the icon of the media application B is displayed at the top of a second area 1621 in the interface 1620 displayed on the first electronic device.

It may be understood that, when the target APP is uninstalled from the second electronic device, an update message is also sent to notify the first electronic device. After receiving the message, the first electronic device refreshes the icon in the second area, and no longer displays the uninstalled target APP.

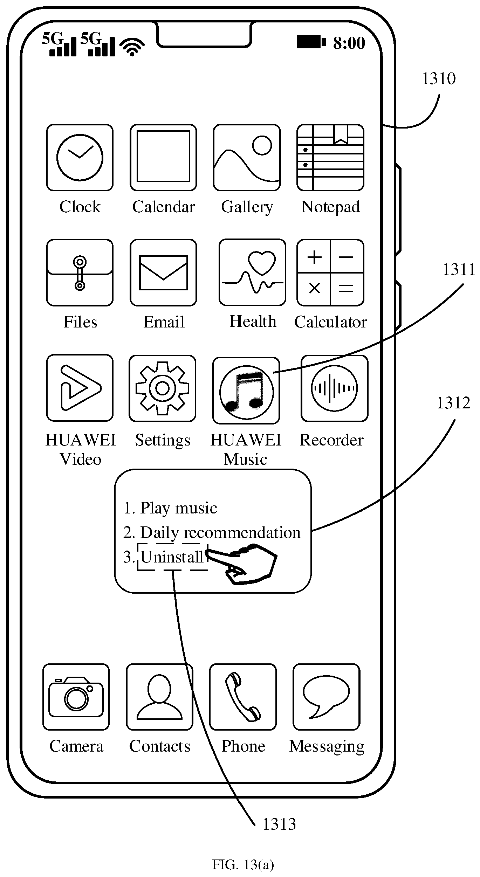

Specifically, as shown in FIG. 13(a), an interface 1310 is displayed on the second electronic device, and the interface includes an icon 1311 of a HUAWEI Music APP, which indicates that the HUAWEI Music APP is installed on the mobile phone. The second electronic device enters an application uninstallation procedure in response to an operation of uninstalling an application by the user. Specifically, the user performing an operation of uninstalling the APP may be: In response to detecting that time for which the user touches and holds an icon of the application is greater than a third threshold, the second electronic device displays a list 1312. The display list includes an uninstallation option 1313. The user taps the uninstallation option 1313 to enter the uninstallation procedure of the application. It should be noted that a method for uninstalling an application is not limited thereto, and the user may also uninstall the application in a control center.

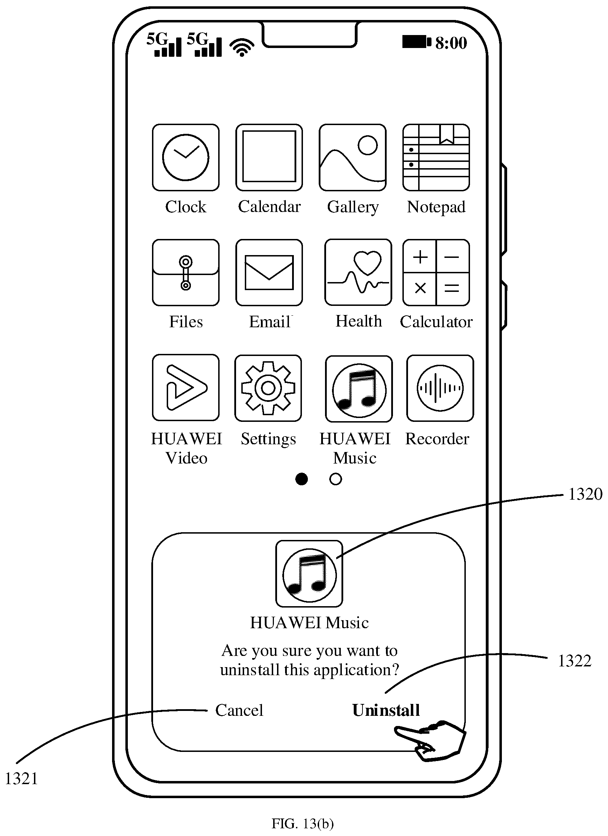

As shown in FIG. 13(b), the second electronic device enters the uninstallation procedure, and may display an uninstallation operation interface 1320. The uninstallation operation interface 1320 may include a cancel button 1321 and an uninstallation button 1322. It may be understood that, in response to tapping the cancel button 1321 by the user, the uninstallation procedure is exited; and in response to tapping the uninstallation button 1322 by the user, the second electronic device uninstalls the HUAWEI Music APP, and the HUAWEI Music APP is not displayed in an interface of the second electronic device. The icon 1311 in FIG. 13(a) is no longer displayed in the interface 1310.

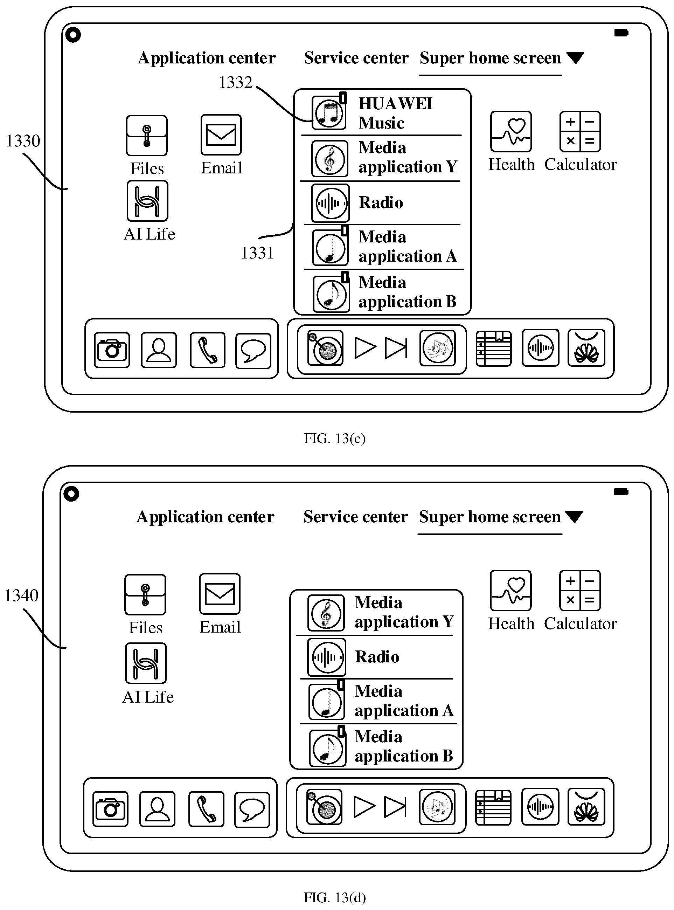

After the HUAWEI Music APP is uninstalled from the second electronic device, the second electronic device notifies the first electronic device through the media framework of the second electronic device. After receiving the second area, the first electronic device refreshes the second area of the media playing center, and deletes the icon of the HUAWEI Music APP from the second area. As shown in FIG. 13(c), an interface 1330 is displayed on the first electronic device, and the icon 1332 in the second area in the interface is deleted. Effect obtained through deletion is shown in FIG. 13(d).

It may be understood that, if the HUAWEI Music APP is running in the media playing center of the first electronic device, after the second electronic device uninstalls the HUAWEI Music APP, the media playing center of the first electronic device no longer displays the running information of the HUAWEI Music APP, and the media playing center of the first electronic device is restored to a state in which no APP is running. Alternatively, when the HUAWEI Music APP is uninstalled from the second electronic device, the second electronic device detects that the HUAWEI Music APP is running in the media center of the first electronic device, and pops up prompt information to notify the user whether to continue to uninstall the HUAWEI Music APP. A specific form of performing the uninstallation solution is not specially limited in embodiments of this application.

It may be understood that, when the operation of uninstalling the target APP is performed on the first electronic device, the second electronic device is notified to uninstall the target APP. After completing the uninstallation operation, the second electronic device sends an update message to notify the first electronic device. After receiving the message, the first electronic device refreshes the icon in the second area, and no longer displays the uninstalled target APP.

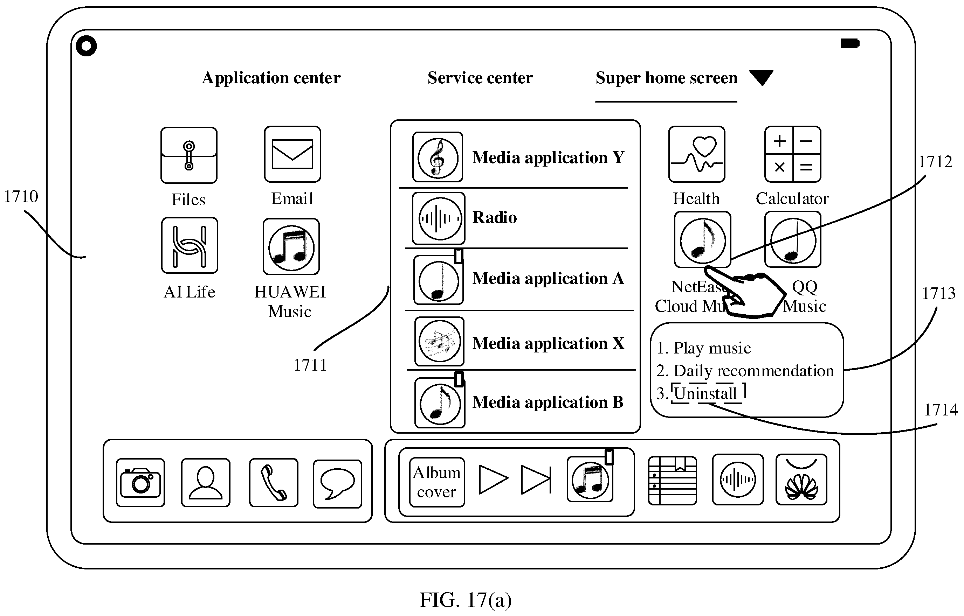

Specifically, as shown in FIG. 17(a), an interface 1710 is displayed on the first electronic device, and the interface includes a second area 1711. An icon of the media application B is displayed in the second area 1711. The interface further includes an icon 1712 of the media application B. The first electronic device enters an application uninstallation procedure in response to an operation of uninstalling an application performed by the user. Specifically, the user performing an operation of uninstalling the APP may be: In response to detecting that time for which the user touches and holds an icon of the application is greater than a fifth threshold, the first electronic device displays a list 1713. The display list includes an uninstallation option 1714. The user taps the uninstallation option 1714 to enter the uninstallation procedure of the application. It should be noted that a method for uninstalling an application is not limited thereto, and the user may also uninstall the application in a control center.

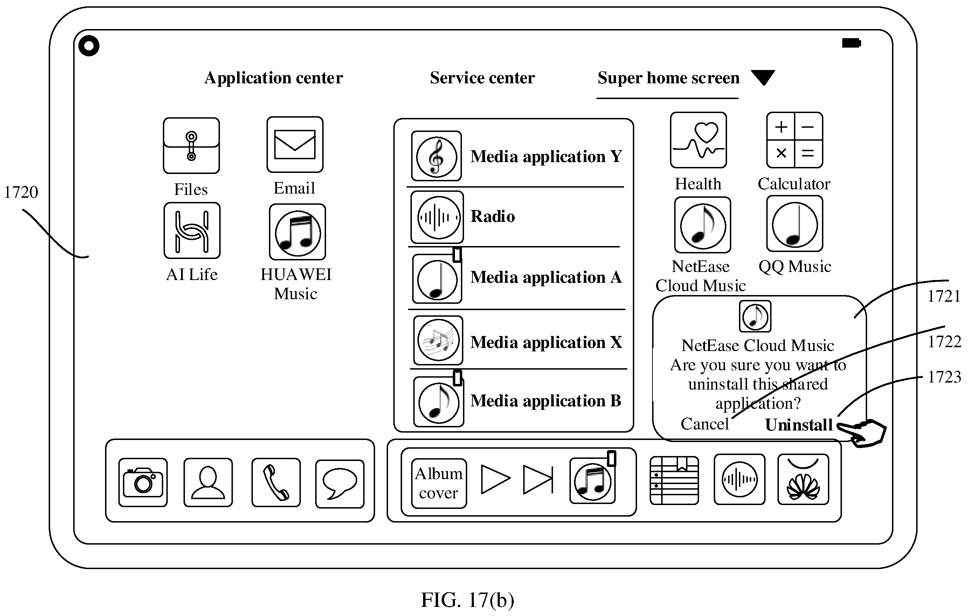

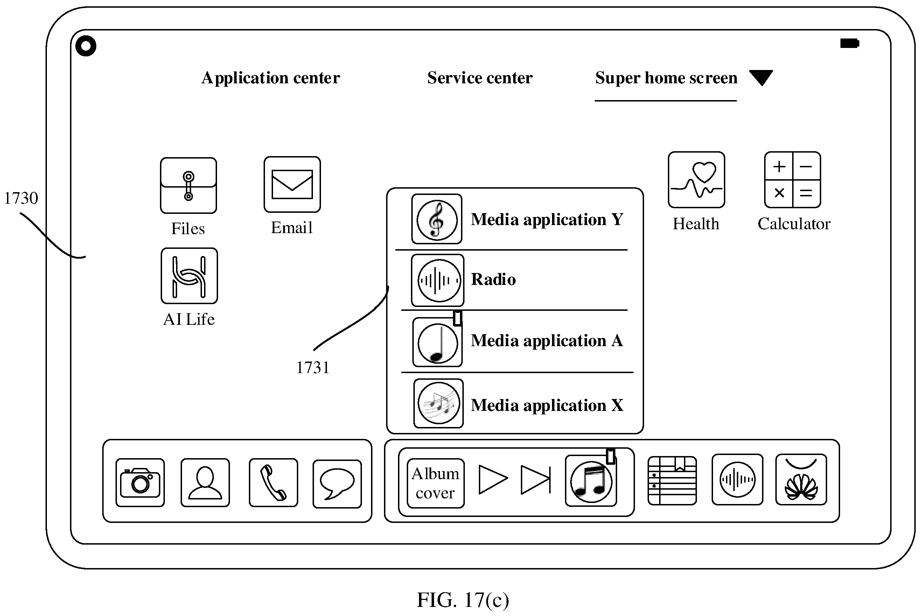

As shown in FIG. 17(b), an interface 1720 is displayed on the first electronic device. In response to tapping the uninstallation option 1714 in FIG. 17(a) by the user, the media application B enters an uninstallation confirmation procedure, and the interface 1720 displays an uninstallation confirmation control 1721. The uninstallation operation interface 1721 may include a cancel button 1722 and an uninstallation button 1723. It may be understood that the uninstallation procedure is exited in response to tapping the cancel button 1722 by the user. In response to tapping the uninstallation button 1723 by the user, the first electronic device notifies the second electronic device to uninstall the media application B. If the second electronic device successfully uninstalls the media application B, the second electronic device notifies the first electronic device to delete the icon of the media application B, and the media application B is not displayed in the interface of the first electronic device. As shown in FIG. 17(c), the icon of the media application B is no longer displayed in the second area in an interface 1731 displayed on the first electronic device. For example, if the second electronic device fails to be uninstalled, the first electronic device considers that the uninstallation operation fails, and exits the uninstallation procedure. The icon of the media application B is still displayed in the interface 1730.

Further, to operate the APP of the second electronic device on the first electronic device, the first electronic device needs to send operation instructions for starting and uninstalling to the second electronic device, and the second electronic device sends an update message to notify the first electronic device to refresh the second area.

It may be understood that, if the media application B is running in the media playing center of the first electronic device, after the first electronic device uninstalls the media application B, the media playing center of the first electronic device no longer displays running information of the media application B, and the media playing center of the first electronic device is restored to a state in which no APP is running. Alternatively, when the first electronic device uninstalls the HUAWEI media application B, the first electronic device detects that the media application B is running in the media center of the second electronic device, and pops up prompt information to indicate that the second electronic device is running, to remind the user whether to continue to uninstall the media application B; and if the media application B continues to be uninstalled, the first electronic device performs the uninstallation procedure. A specific form of performing the uninstallation solution is not specially limited in embodiments of this application.

In an implementation, the information that is sent by the second electronic device and that is about the target APP of the first electronic device includes information about the media that is being played by the target APP, and the first electronic device displays, based on the information about the media that is being played by the target APP, information about media latest played by the N target APPs, the information about the media latest played by each target APP is displayed in association with the icon of the target APP.

Specifically, when the media information of the N target APPs is displayed, the media information of the N target APPs is displayed in association with the icon of the target APP to display information about media latest played by the target APP. The user may select, from the N target APPs based on the information about the media latest played, an APP that the user wants to start.

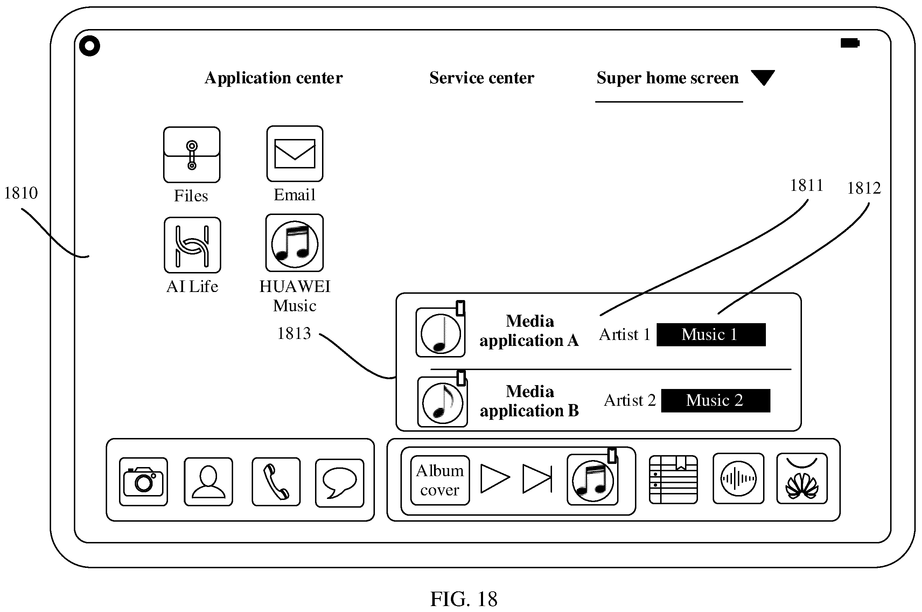

As shown in FIG. 18, an interface 1810 is displayed on the first electronic device, and the interface includes a second area 1813 of the second interface. In addition to displaying icons and names of target APPs in the second area 1813, the interface further displays audio content played by an application. The user may quickly find, through the audio content displayed in the target APP, an audio APP that needs to be started. This avoids a problem that the user needs to tap the icon of the target APP to confirm the playing content on the running interface of the media playing center because the user cannot view the audio playing content.

In an implementation, when displaying information such as an APP icon and a name, the second area may display the information according to different sorting rules. It may be understood that, according to the sorting rule, the local APP and the sharing application are not distinguished, and the local APP and the sharing application may be sorted together. Specifically, when displaying the APPs, the second area of the first electronic device may perform sorting according to a first sorting rule. The first sorting rule is used to sort the target APPs based on starting time of the target APPs, and the target APPs may be displayed in the second area of the media playing control application in a sequence or a reverse order of the starting time. Generally, a recently started application is arranged at the top of the second area.

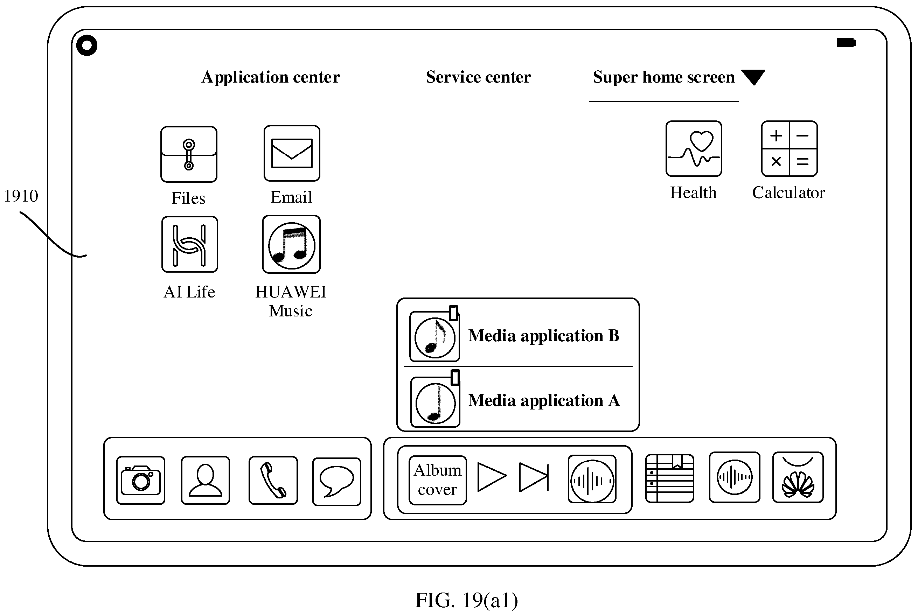

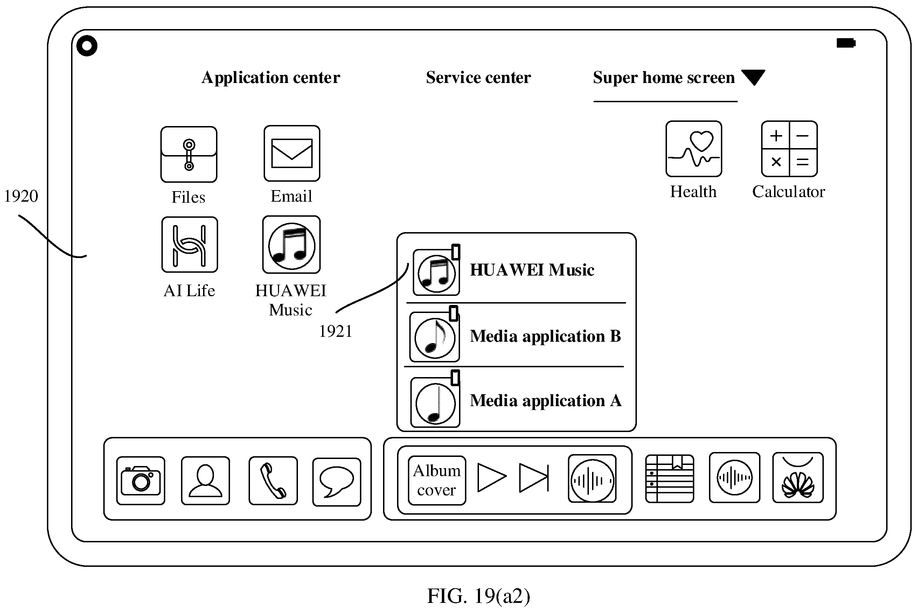

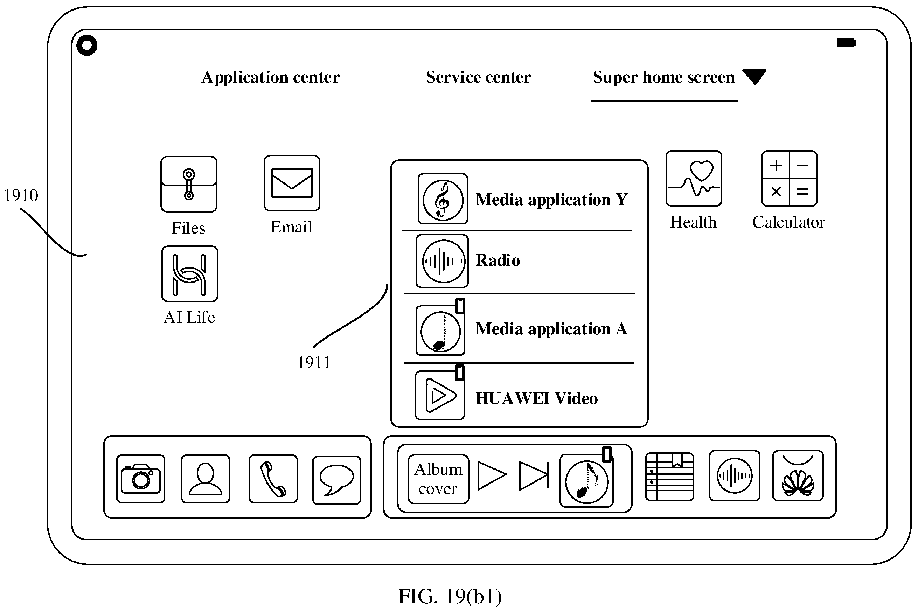

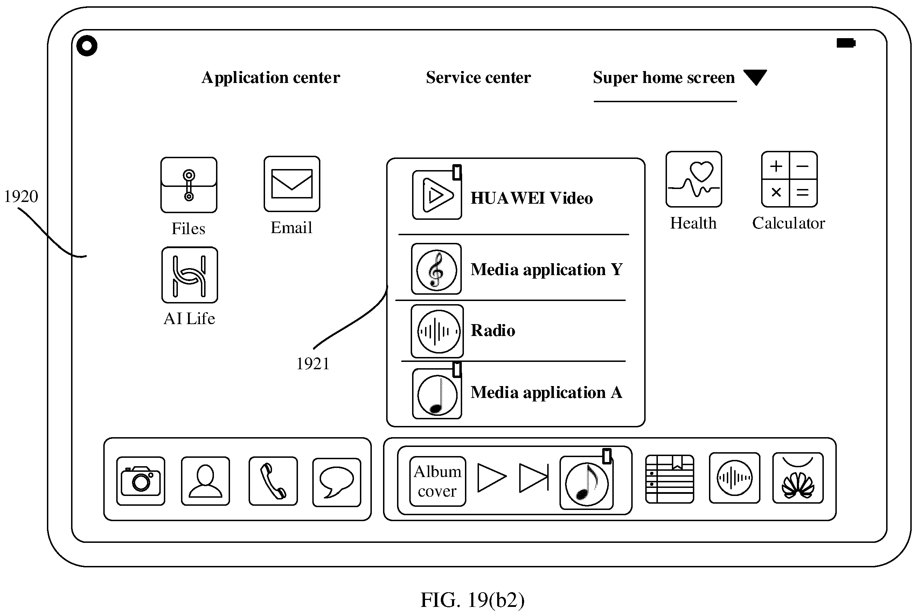

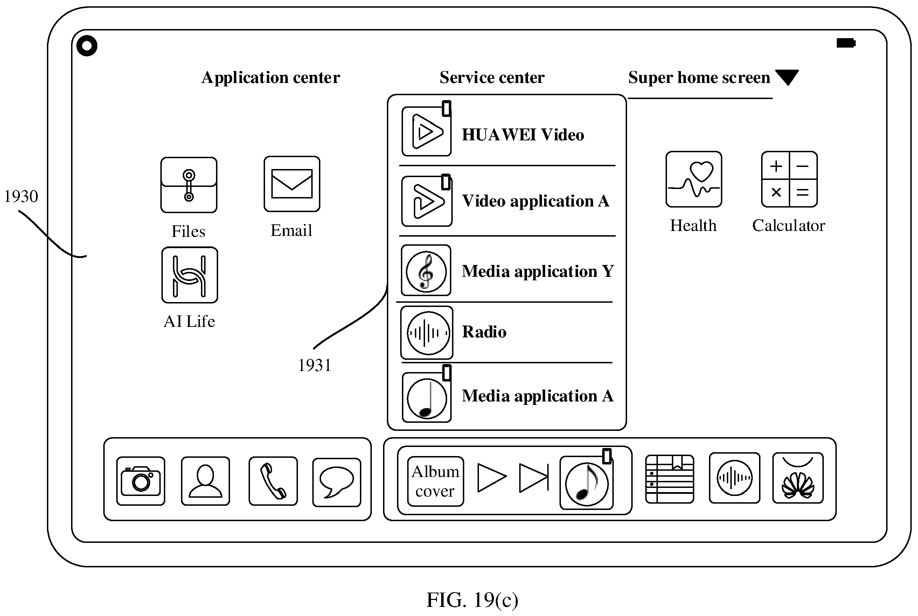

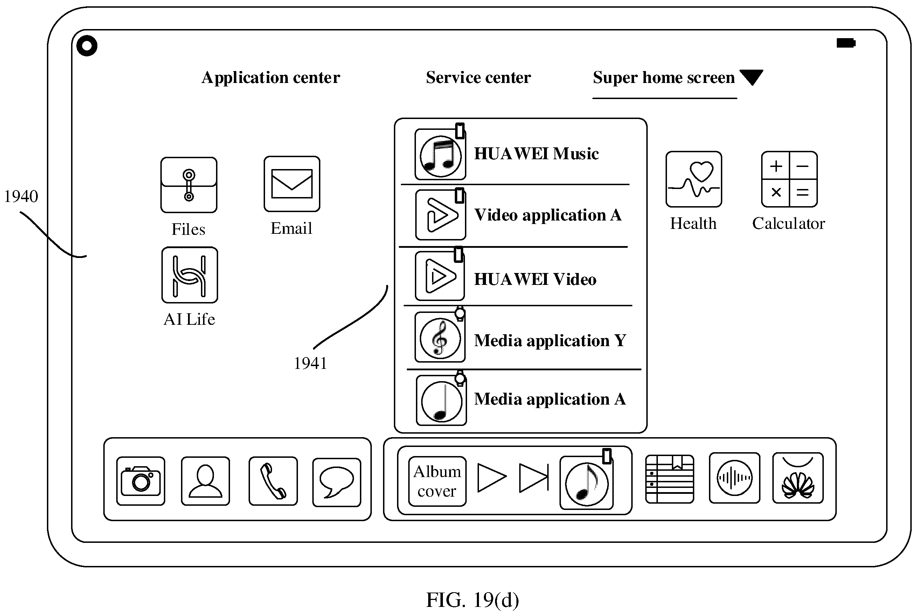

As shown in FIG. 19(a1), in an interface 1910, in the second area of the media playing control application, the media application B and the media application A are sorted in the reverse order of latest starting time, to be specific, the media application B is started after the media application A. In this case, the user starts the HUAWEI Music APP on the second electronic device, and the first electronic device receives an update message sent by the second electronic device. The update message includes information about the HUAWEI Music APP, the first electronic device displays the HUAWEI Music APP in the second area of the media playing control application based on starting time of the HUAWEI Music APP. Because the starting time of the HUAWEI Music APP is later than the starting time of the media application B and the starting time of the HUAWEI Music APP is later than the starting time of the media application A, the HUAWEI Music APP is displayed at the top of the second area according to the first sorting rule, as shown in FIG. 19(a2), in an interface 1920, an icon of the HUAWEI Music APP is displayed at the top of the second area. The first sorting rule is a common sorting rule, and is also a default sorting rule of the first electronic device, and is easy to understand and accept by the user.

In an implementation, when the APPs are displayed in the second area of the first electronic device, the APPs are sorted according to a second sorting rule. The second sorting rule is used for sorting based on a usage scenario of the device.

Specifically, the first electronic device may be different devices, and is used in different use scenarios, for example, a smart cockpit and a home theater. Even for devices of a same type, users have different sorting requirements in different application scenarios. When the first electronic device is provided for the driver as a center console in the intelligent cockpit, the first electronic device is more used as an audio playing device to provide an auxiliary function for the driver. In this case, an APP of an audio type is arranged in a sorting starting position in the second area in the first electronic device, as shown in FIG. 19(b1), in the interface 1910, an audio APP in a second area 1911 of the media playing control application is displayed above a video APP. Optionally, for a plurality of APPs of a same type, secondary sorting may be performed according to the first sorting rule. Similarly, when the first electronic device is used as a tablet in the smart cockpit and provided for a passenger to use or is used as a smart screen in a home theater scenario, the first electronic device is more used as a video playing device to provide a video watching function for a driver or a family member. In this case, an APP of a video type is arranged in a sorting starting position in the second area in the first electronic device. As shown in FIG. 19(b2), in the interface 1920, the video APP in the second area 1921 of the media playing control application is displayed above the audio APP. Similarly, secondary sorting may also be performed according to the first sorting rule during secondary sorting.

Optionally, the first electronic device may provide a scenario configuration interface, and the user may select a proper scenario on the scenario configuration interface. For example, when the first electronic device is used as the central console in the intelligent cockpit, the first electronic device may provide a video watching function for the driver when the vehicle is stalled and stopped. In this case, the user may select, on the configuration interface, a scenario of the first electronic device as a home theater, in this case, the video APP is preferentially arranged before the audio APP in the second area.

In an implementation, when the APPs are displayed in the second area of the first electronic device, the APPs are sorted according to a third sorting rule. The third sorting rule is used for sorting based on a user habit.

Specifically, when different users log in to the first electronic device, a sequence of APPs displayed in the second area of the first electronic device is different based on use of the login user.

Specifically, for example, the first electronic device is the center console in the smart cockpit, the second device is a smartphone, and the first user is accustomed to starting a video APP on the smartphone. When the user enters the intelligent cockpit, the first electronic device (the center console) is connected to the second electronic device. In response to that the user is accustomed to starting an APP of a video type, the second area of the first electronic device displays, at a start position, the APP of the video type that has been run by the user for the second electronic device. As shown in FIG. 19(c), the HUAWEI Video APP and the video application A that have been run on the second electronic device (the smartphone) are arranged before the audio APP.

Optionally, a usage habit of the user may be stored on the second electronic device. The first electronic device is connected to the second electronic device, and the first electronic device and the second electronic device are logged in by using a same account. In this case, the second electronic device synchronizes the usage habit of the user to the first electronic device; or the usage habit of the user may be stored on the server when the usage habit of the user is used for running. When the user logs in to the first electronic device, the usage habit of the user is obtained by accessing the server, and sorting is performed based on the usage habit of the user.

Optionally, when the user is a new user, and usage habit data of the user is not stored in the electronic device or the service end, the first electronic device may obtain, from the server based on a model of the electronic device, a usage habit of the user who uses the model of the first electronic device. For example, a user purchases a smart screen and registers and logs in to the smart screen. Most users purchase the smart screen to watch a high-definition video. After the user connects the smart screen to a mobile phone, an APP that has a high-definition video capability and that has been started by the user is arranged first in a second area of the smart screen. This helps the user start the video APP and provides better user experience.

In an implementation, when the APPs are displayed in the second area of the first electronic device, the APPs are sorted according to a fourth sorting rule. The fourth sorting rule is used for sorting based on a quantity of times that the first electronic device is connected to the second electronic device. For example, the HUAWEI Music APP belongs to the second electronic device, the media application B belongs to the third electronic device, and a quantity of times that the first electronic device is connected to the second electronic device is greater than a quantity of times that the first electronic device is connected to the third electronic device. Therefore, the HUAWEI Music APP belonging to the first electronic device is arranged before the media application B.

As shown in FIG. 19(d), the second electronic device is a smartphone, and a mobile phone thumbnail is displayed in an upper right corner of a target APP belonging to the second electronic device. The third electronic device is a smartwatch, and a watch thumbnail is displayed in an upper right corner of the target APP belonging to the third electronic device. A quantity of times that the first electronic device connects to the smartphone is greater than a quantity of times that the first electronic device connects to the smartwatch. In the second area, the HUAWEI Music APP, the video application A, and the HUAWEI Video that belong to the second electronic device are arranged before the media application Y and the media application A that belong to the third electronic device.

It may be understood that, when the first electronic device uses the fourth sorting rule, the sorting rule is not limited to an absolute quantity of times that the first electronic device is connected to another external device, and may alternatively be a relative quantity of times calculated by the processor of the first electronic device according to an algorithm, for example, a relative value (a quantity of times) obtained according to a logarithmic formula on a value of the absolute quantity of times for comparison. Optionally, An algorithm applied to the first electronic device may be configured through a server.

It can be learned, from the foregoing implementation of sorting, that the first electronic device may be simultaneously connected to a plurality of electronic devices. Target APPs of a plurality of electronic devices may be displayed in the second area of the first electronic device. Specifically, as shown in FIG. 3(a) to FIG. 3(c), the first electronic device is used as the smart tablet 300, and may be connected to the phone 301, a smart screen 302, a tablet 303, a notebook computer 304, and the like. After the connection is completed, the first electronic device may obtain a target APP of each connected device, and display the target APP in the second area of the first electronic device.

It may be understood that, when APP icons of a plurality of devices are displayed in the second area of the first electronic device, sorting may be performed according to the foregoing first to fourth sorting rules. The sorting rules are not described herein again.

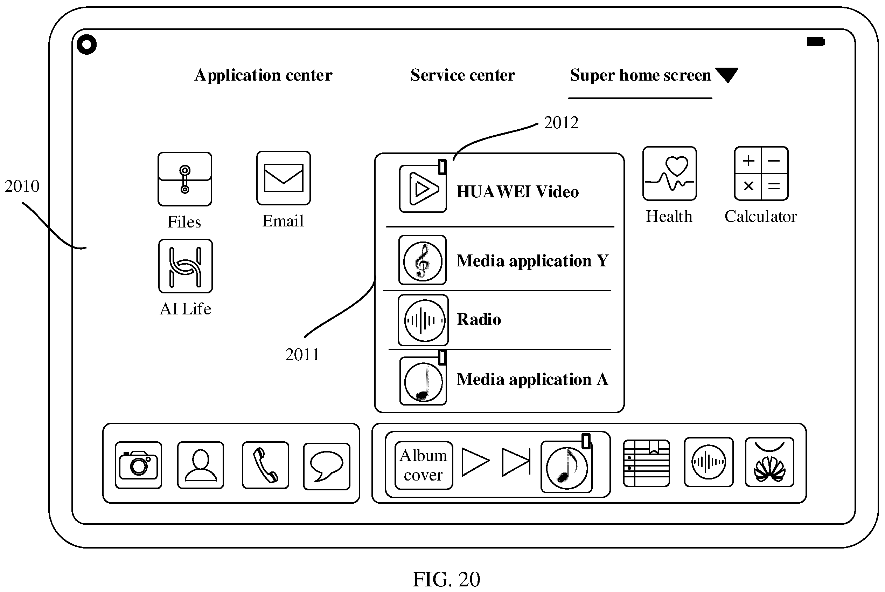

In an implementation, the media playing control application may alternatively be an audio/video playing control application. When the target APP is displayed in the second area, the target APP may be an audio APP or a video APP. As shown in FIG. 20, in an interface 2010, in addition to displaying audio APPs, a second area 2011 further displays an icon 2012 of the HUAWEI Video APP on the second electronic device. In an implementation, when the first electronic device is connected to the second electronic device, different user accounts may be used to log in to different electronic devices. When the devices are connected, the first electronic device is authorized to obtain a media application of the second electronic device. For example, a user 1 logs in to the first electronic device, and a user 2 logs in to the second electronic device. After the first electronic device is connected to the second electronic device, the started media application of the second electronic device can be seen in the second area of the media playing control application on the first electronic device. A user login scenario is not specially limited in embodiments of this application, that is, user accounts for logging in to the device may be a same user account, or may be different user accounts.

The foregoing embodiments may be used separately, or may be used in combination to implement different technical effect.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

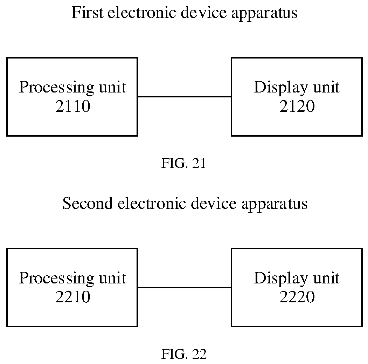

FIG. 21 is a diagram of a structure of a communication apparatus for implementing media playing control according to an embodiment of this application. The apparatus is used in a first electronic device. The apparatus provided in this embodiment includes:
a processing unit 2110 and a display unit 2120.

The display unit is configured to display a first interface of a media playing control application on the first electronic device.

The processing unit is configured to: detect a first input operation acting on the first interface; and in response to the first input operation, obtain information about M target applications installed on a second electronic device, where the second electronic device is connected to the first electronic device, the M target applications are applications of a media type that have been started on the second electronic device, the media type is an audio type or a video type, and M is a positive integer.

The display unit is further configured to display a second interface of the media playing control application based on information about N target applications in the M target applications, where the second interface includes icons of the N target applications.

The processing unit is further configured to: detect a second input operation performed on a first icon, where the first icon is an icon of a first application in the N target applications; and in response to the second input operation, obtain media data of the first application running on the second electronic device, and play the media data.

FIG. 22 is a diagram of a structure of a communication apparatus for implementing media playing control according to an embodiment of this application. The apparatus is used in a second electronic device. The apparatus provided in this embodiment includes:
a processing unit 2210 and a display unit 2220.

The processing unit is configured to send, by using the communication unit, information about M target applications installed on the second electronic device to a first electronic device, where the first electronic device is connected to the second electronic device, the M target applications are applications of a media type that have been started on the second electronic device, the media type is an audio type or a video type, and M is a positive integer.

The processing unit is further configured to: receive, by using the communication unit, a first request message sent by the first electronic device, where the first request message is used to request media data of a first application in the M target applications; and send the media data of the first application to the first electronic device by using the communication unit.

The apparatus provided in this embodiment can perform the foregoing method embodiments, and implementation principles and technical effect of the apparatus are similar to those of the foregoing method embodiments. Details are not described herein.

An embodiment of this application further provides an electronic device, including a display, a processor, a memory, one or more sensors, a power button, an application, and a computer program. The foregoing components may be connected through one or more communication buses. The one or more computer programs are stored in the memory and are configured to be executed by the one or more processors. The one or more computer programs include instructions, and the instructions may be used to enable the electronic device to perform the steps of the interface display method in the foregoing embodiments.

For example, the processor may be specifically the processor 110 shown in FIG. 1, the memory may be specifically the internal memory 121 shown in FIG. 1 and/or an external memory connected to the electronic device, and the display may be specifically the display 194 shown in FIG. 1. The sensor may be specifically one or more sensors in the sensor module 180 shown in FIG. 1, and the power button may be the power button 141 shown in FIG. 1. This is not limited in embodiments of this application.

In addition, an embodiment of this application further provides a graphical user interface (graphical user interface, GUI) on an electronic device. The graphical user interface specifically includes a graphical user interface displayed when the electronic device performs the foregoing method embodiments.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like. In a case in which no conflict occurs, the solutions in the foregoing embodiments may be combined for use.

## Claims

1. A method for implementing media playing control, wherein the method is applied to a first electronic device, and the method comprises:
displaying a first interface of a media playing control application on the first electronic device;
detecting a first input operation performed on the first interface;
in response to the first input operation, obtaining information about M target applications installed on a second electronic device, wherein the second electronic device is connected to the first electronic device, the M target applications are applications of a media type on the second electronic device, the media type is an audio type or a video type, and M is a positive integer;
displaying a second interface of the media playing control application based on information about N target applications in the M target applications, wherein the second interface comprises icons of the N target applications;
detecting a second input operation performed on a first icon, wherein the first icon is an icon of a first application in the N target applications; and
in response to the second input operation, obtaining media data of the first application running on the second electronic device, and playing the media data.

2. The method according to claim 1, wherein the M target applications have been started on the second electronic device.

3. The method according to claims 1 and 2, wherein the second interface comprises a first area and a second area, the first area is used to display a media playing status, and the second area comprises the icons of the N target applications.

4. The method according to claim 3, wherein the method further comprises:
in response to the second input operation, displaying the first icon and a media playing status of the first application in the first area.

5. The method according to any one of claim 3 or 4, wherein the method further comprises:
in response to the second input operation, updating display information in the second area, wherein updated display information does not comprise the first icon.

6. The method according to claim 5, wherein the method comprises:
detecting a third input operation performed on a second icon in the second area, wherein the second icon is an icon of a second application in the N target applications;
in response to the third input operation, obtaining media data of the second application running on the second electronic device, and playing the media data;
displaying the second icon and a media playing status of the second application in the first area; and
updating the display information in the second area, wherein updated display information comprises the first icon and does not comprise the second icon.

7. The method according to any one of claims 1 to 6, wherein the method further comprises:
displaying a device type icon, wherein the device type icon indicates a type of the second electronic device, and the device type icon is displayed in association with the icons of the N target applications.

8. The method according to any one of claims 1 to 7, wherein the method comprises:
displaying information about media latest played by the N target applications, wherein information about media latest played by each target application is displayed in association with an icon of the target application.

9. The method according to any one of claims 1 to 8, wherein the method further comprises:
receiving an update message sent by the second electronic device, wherein the update message comprises information about a third application, and the third application does not belong to the M target applications; and
displaying an icon of the third application in the second area based on the update message.

10. The method according to any one of claims 1 to 9, wherein a display sequence of the icons of the N target applications is consistent with a sequence of latest starting time of the target applications.

11. The method according to any one of claims 3 to 10, wherein the method comprises:
displaying, in the second area, an icon of at least one application of the media type installed on the first electronic device.

12. A system for implementing media playing control, wherein the system comprises a first electronic device and a second electronic device, wherein
the first electronic device is configured to:
display a first interface of a media playing control application on the first electronic device;
in response to a detected first input operation performed on the first interface, obtain information about M target applications installed on the second electronic device, wherein the second electronic device is connected to the first electronic device, the M target applications are applications of a media type on the second electronic device, the media type is an audio type or a video type, and M is a positive integer; and
display a second interface of the media playing control application based on information about N target applications in the M target applications, wherein the second interface comprises icons of the N target applications; detect a second input operation performed on a first icon, wherein the first icon is an icon of a first application in the N target applications; and in response to the second input operation, obtain media data of the first application running on the second electronic device, and play the media data; and
the second electronic device is configured to:
send the information about the M target applications to the first electronic device;
receive a first request message sent by the first electronic device, wherein the first request message is used to request the media data of the first application; and
send the media data of the first application to the first electronic device based on the first request message.

13. The system according to claim 12, wherein the M target applications have been started on the second electronic device.

14. The system according to claim 12 or 13, wherein the first electronic device further displays a device type icon, the device type icon indicates a type of the second electronic device, and the device type icon is displayed in association with the icons of the N target applications.

15. The system according to any one of claims 12 to 14, wherein the first electronic device is further configured to receive an update message sent by the second electronic device, the update message comprises information about a second application, and the second application does not belong to the M target applications; and
the first electronic device displays an icon of the second application in second area based on the update message.

16. The system according to any one of claims 12 to 15, wherein the M target applications belong to a first allowlist of the second electronic device, and the first allowlist comprises one or more applications of the media type; and
the second electronic device is further configured to:
start the second application, wherein the second application does not belong to the M target applications and belongs to the first allowlist; and
send an update message to the first electronic device, wherein the update message comprises updated information about the M target applications, and the updated information about the M target applications comprises information about the second application.

17. A method for implementing media playing control, wherein the method is applied to a second electronic device, and the method comprises:
sending information about M target applications installed on the second electronic device to a first electronic device, wherein the first electronic device is connected to the second electronic device, the M target applications are applications of a media type on the second electronic device, the media type is an audio type or a video type, and M is a positive integer;
receiving a first request message sent by the first electronic device, wherein the first request message is used to request media data of a first application in the M target applications; and
sending the media data of the first application to the first electronic device.

18. The method according to claim 17, wherein the M target applications have been started on the second electronic device.

19. The method according to claim 17 or 18, wherein the M target applications belong to a first allowlist, and the first allowlist comprises one or more applications of the media type; and the method comprises:
starting a second application, wherein the second application does not belong to the M target applications and belongs to the first allowlist; and
sending an update message to the first electronic device, wherein the update message comprises updated information about the M target applications, and the updated information about the M target applications comprises information about the second application.

20. The method according to claim 19, wherein applications in the M target applications are latest M applications that are in the first allowlist and that are determined based on latest starting time of the applications.

21. The method according to any one of claims 17 to 20, wherein the M target applications are sorted based on latest starting time of the target applications when the information about the M target applications is sent.

22. The method according to any one of claims 17 to 21, wherein information about the target application comprises information about media latest played by the target application.

23. An electronic device, comprising one or more processors, one or more memories, and a display, wherein the one or more memories store one or more computer programs, the one or more computer programs comprise instructions, and when the instructions are executed by the one or more processors, the electronic device is enabled to perform the method according to any one of claims 1 to 11 or claims 17 to 22.

24. A computer-readable storage medium, comprising computer instructions, wherein when the computer instructions are run on an electronic device, the electronic device is enabled to perform the method according to any one of claims 1 to 11 or claims 17 to 22.

25. A computer program product, wherein when the computer program product runs on a computer, the computer is enabled to perform the method according to any one of claims 1 to 11 or claims 17 to 22.
